(19) **Europäisches Patentamt / European Patent Office / Office européen des brevets**

(11) **EP 2 610 054 A1**

(12) **EUROPEAN PATENT APPLICATION**
published in accordance with Art. 153(4) EPC

(43) Date of publication:
03.07.2013 Bulletin 2013/27

(21) Application number: 11819824.1

(22) Date of filing: 16.08.2011

(51) Int Cl.:
*B32B 5/18* (2006.01)   *C08J 9/28* (2006.01)

(86) International application number:
PCT/JP2011/068554

(87) International publication number:
WO 2012/026361 (01.03.2012 Gazette 2012/09)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 17.06.2011 JP 2011135449
17.06.2011 JP 2011135448
17.06.2011 JP 2011135009
23.05.2011 JP 2011114588
14.03.2011 JP 2011055085
07.10.2010 JP 2010227425
07.10.2010 JP 2010227424
07.10.2010 JP 2010227423
07.10.2010 JP 2010227422
07.10.2010 JP 2010227421
06.09.2010 JP 2010198922
06.09.2010 JP 2010198921
06.09.2010 JP 2010198920
23.08.2010 JP 2010185841

(71) Applicant: **Nitto Denko Corporation**
**Ibaraki-shi**
**Osaka 567-8680 (JP)**

(72) Inventors:
• **HIRAO, Akira**
**Ibaraki-shi**
**Osaka 567-8680 (JP)**
• **DOI, Kohei**
**Ibaraki-shi**
**Osaka 567-8680 (JP)**
• **ISEKI, Azusa**
**Ibaraki-shi**
**Osaka 567-8680 (JP)**
• **NAKAYAMA, Yusuke**
**Ibaraki-shi**
**Osaka 567-8680 (JP)**
• **NAGASAKI, Kunio**
**Ibaraki-shi**
**Osaka 567-8680 (JP)**

(74) Representative: **Grünecker, Kinkeldey, Stockmair & Schwanhäusser**
**Leopoldstrasse 4**
**80802 München (DE)**

(54) **COMPOSITE SHEET**

(57)   Provided is a novel composite sheet, including a substrate and a foamed layer which is provided on at least one surface side of the substrate, at a low cost in an environment-friendly manner, in which the composite sheet includes a foamed layer having a uniform fine-cell structure, the average pore diameter of each of spherical cells of the foamed layer can be precisely controlled to a small one, the control range of the density of the foamed layer is wide, the control range of the thickness of the foamed layer is wide, and the composite sheet can express an excellent mechanical strength and is preferably excellent in toughness and heat resistance. The composite sheet includes a substrate; and a foamed layer which is provided on at least one surface side of the substrate, in which: the foamed layer has spherical cells, an average pore diameter of each of the spherical cells being less than 30 $\mu$m; and the foamed layer has a density of 0.1 g/cm$^3$ to 0.9 g/cm$^3$.

FIG. 2

**Description**

Technical Field

The present invention relates to a composite sheet, and more particularly, to a composite sheet including a substrate and a foamed layer which is provided on at least one surface side of the substrate.

Background Art

A composite sheet including a substrate and a foamed layer which is provided on at least one surface side of the substrate is widely utilized in various applications such as a water-absorbing material, a water-retaining material, a cushioning material, a heat-insulating material, a sound-absorbing material, a separating film, various boards such as a circuit board, a holding member such as a printing plate, a supporting member, a polishing pad for a polishing process and a press platen for supporting the same, and a supporting base to be used for retaining or conveying, for example, a semiconductor and various boards from their back surfaces by vacuum suction or the like.

Hitherto, the composite sheet has been obtained by forming a foamed layer into a shape by a wet coagulation method, a dry transfer method, a chemical foaming method involving using a chemical foaming agent, a heat-expandable plastic microballoon, a physical foaming method involving using an aqueous dispersion of a thermoplastic resin, a mechanical foaming method involving mixing air into an aqueous dispersion of a thermoplastic resin, or the like (see, for example, Patent Literatures 1 to 3).

However, although the composite sheet including a foamed layer obtained by the wet coagulation method is a porous sheet, there is a problem in that the composite sheet cannot express a sufficient mechanical strength because its pore diameter sizes are non-uniform in its thickness direction. There is also a problem in that it takes a long time to perform the wet type coagulation.

The composite sheet including a foamed layer obtained by the dry transfer method or the composite sheet including a foamed layer obtained by the mechanical foaming method involving mixing air into an aqueous dispersion of a thermoplastic resin has pore diameter sizes distributed in a nearly uniform manner in its thickness direction. However, there is a problem in that formation of pores using a gas makes it difficult to control a pore diameter size, and thus pores having large diameters are generated in some cases, with the result that a sufficient mechanical strength cannot be expressed. There is also a problem in that the dry transfer method requires using an environmental load substance such as an organic solvent in its production steps, and thus it is necessary to finally remove the environmental load substance included in a resin by heating drying or the like from the viewpoint of environment-friendliness.

There is a problem in that the composite sheet including a foamed layer obtained by the chemical foaming method involving using a chemical foaming agent or the composite sheet including a foamed layer obtained by the heat-expandable plastic microballoon requires high temperature controllability in its production steps, and hence inevitably requires a dedicated facility that is expensive and large. There is also a problem in that, in the composite sheet including a foamed layer obtained by the chemical foaming method involving using a chemical foaming agent or the composite sheet including a foamed layer obtained by the heat-expandable plastic microballoon, a size of the foamed layer included in the composite sheet becomes 3 to 5 times as large as that before the foaming treatment, and its pore diameter also becomes large, with the result that a sufficient mechanical strength cannot be expressed.

When the foamed layer included in the composite sheet is formed by subjecting a thermoplastic resin to extrusion molding, there is a problem in that the composite sheet shows a remarkable dimensional change during heating storage, and its cell structure collapses owing to melting or the like of the thermoplastic resin, with the result that sufficient heat resistance cannot be expressed (see, for example, Patent Literature 1).

Although the composite sheet including a foamed layer obtained by the physical foaming method involving using an aqueous dispersion of a thermoplastic resin is a fine porous sheet, there is a problem in that a control range of a density of a porous layer is limited to a narrow range, i.e., 0.5 g/cm$^3$ to 0.9 g/cm$^3$. A clearance upon application of the aqueous dispersion is suitably about 50 $\mu$m to 600 $\mu$m, and thus there is also a problem in that volatilization of water reduces a thickness of the porous layer as compared to that before the treatment, with the result that a control range of the thickness of the porous layer becomes narrow (see, for example, Patent Literature 3).

Meanwhile, a W/O type emulsion is known as, in particular, a W/O type high internal phase emulsion (HIPE) (see, for example, Patent Literature 4), and through formation of a W/O type HIPE including a polymerizable monomer in an external oil phase, followed by polymerization, geometrical arrangement of an oil phase and an aqueous phase in the emulsion has been studied. For example, it has been reported that, through preparation of a W/O type HIPE including 90% of an aqueous phase component and using a styrene monomer in an oil phase component, followed by polymerization, geometrical arrangement of an oil phase and an aqueous phase in the emulsion is studied (see, for example, Non Patent Literature 1). Non Patent Literature 1 reports that, when the W/O type HIPE is prepared by stirring the oil phase and the aqueous phase through use of a lipophilic emulsifying agent, followed by polymerization, a hard porous material having a cell shape which depends on a phase relationship in a precursor of the W/O type HIPE is formed.

Physical properties of the porous material formed by polymerizing the W/O type emulsion are influenced by kinds of components constituting the W/O type emulsion and emulsifying conditions in the preparation of the W/O type emulsion.

For example, there has been reported a method involving preparing an absorbing porous polymer from a W/O type HIPE including at least 90 parts by weight of water and an oil phase including a polymerizable monomer, asurfactant, and a polymerization catalyst (see, for example, Patent Literature 5).

There has been reported a method involving preparing a hydrophobic porous material having a dry density of less than about 100 mg/cc by subjecting a W/O type HIPE including at least an aqueous phase component and an oil phase component including a polymerizable monomer, a surfactant, and a polymerization catalyst to polymerization, followed by repeated washing and dehydration (see, for example, Patent Literature 6).

For example, there has been reported a production method for a porous cross-linked polymer involving continuously performing a process commencing on preparation of a W/O type HIPE and ending on polymerization thereof (see, for example, Patent Literature 7).

For example, there has been reported a production method for a foam involving subjecting a W/O type HIPE to photopolymerization (see, for example, Patent Literature 8).

As described above, some examples in which the porous material is produced from the W/O type emulsion have already been known. However, such porous material involves some problems.

For example, there has been reported a production method for a foam involving photopolymerization using a W/O type HIPE including a (meth)acrylic monomer, polyfunctional (meth)acrylic monomer, and a lipophilic emulsifying agent such as sorbitan monooleate in a continuous oil phase component, or a W/O type HIPE including a (meth)acrylic monomer, an aromatic urethane acrylate, and a lipophilic emulsifying agent such as sorbitan monooleate in a continuous oil phase component. However, although a foam formed of a cross-linked type (meth)acrylic polymer is excellent in that it can be provided as a foam having a high cell content, there is a problem in that the foam is insufficient in cell structure uniformity. There is also a problem in that the foam is poor in toughness. For example, the foam is fissured (cracked) when subjected to a 180° bending test and a high-compression test (80% or more) (see, for example, Patent Literature 8).

Further, even only slight changes in continuous oil phase component composition (e.g., selection of contents of a monomer/cross-linking agent, an amount of an emulsifying agent, and a type of an emulsifying agent), temperature at the time of emulsification, stirring conditions, and the like of the W/O type emulsion break an emulsion state of the W/O type emulsion, at least part of which is clearly separated into an aqueous phase or an oil phase. Thus, it is not easy to prepare the W/O type emulsion suitable for obtaining a foam of interest.

That is, hitherto, it has been extremely difficult to provide a composite sheet which includes a foamed layer having a uniform fine-cell structure and is excellent in toughness and heat resistance.

Citation List

Patent Literature

[PTL 1] JP 2001-9952 A
[PTL 2] JP 2001-38837 A
[PTL 3] WO 2002/101141 A1
[PTL 4] US 3565817 A
[PTL 5] JP 03-66323 B
[PTL 6] JP 2003-514052 W
[PTL 7] JP 2001-163904 A
[PTL 8] JP 2003-510390 W

Non Patent Literature

[NPL1] "A study of medium and high internal phase ratio water/polymer emulsions" (Lissant and Mahan, Journal of Colloid and Interface Science, Vol. 42, No. 1, Jan. 1973, pp. 201 to 208)

Summary of Invention

Technical Problem

An object of the present invention is to provide a novel composite sheet, including a substrate and a foamed layer which is provided on at least one surface side of the substrate, at a low cost in an environment-friendly manner, in which the composite sheet includes a foamed layer having a uniform fine-cell structure, the average pore diameter of each of spherical cells of the foamed layer can be precisely controlled to a small one, the control range of the density of the foamed layer is wide, the control range of the thickness of the foamed layer is wide, and the composite sheet can express an excellent mechanical strength and is preferably excellent in toughness and heat resistance.

Solution to Problem

A composite sheet of the present invention is a composite sheet, including: a substrate; and a foamed layer which is provided on at least one surface side of the substrate, in which: the foamed layer has spherical cells, an average pore diameter of each of the spherical cells being less than 30 $\mu$m; and the foamed layer has a density of 0.1 g/cm$^3$ to 0.9 g/cm$^3$.

In a preferred embodiment, the composite sheet of the present invention is crack-free in a 180° bending test.

In a preferred embodiment, the composite sheet of the present invention has a rate of dimensional change of less than ±5% when stored at 125°C for 14 days.

In a preferred embodiment, the composite sheet of the present invention has a rate of change in tensile strength of less than ±20% when stored at 125°C for 14 days.

In a preferred embodiment, the foamed layer has an open-cell structure in which through-holes are present between adjacent spherical cells.

In a preferred embodiment, the through-holes each have an average pore diameter of 5 $\mu$m or less.

In a preferred embodiment, the foamed layer has surface openings, an average pore diameter of each of the surface openings being 5 $\mu$m or less.

In a preferred embodiment, the foamed layer has a density of 0.15 g/cm$^3$ to 0.5 g/cm$^3$.

In a preferred embodiment, the substrate includes at least one kind selected from a fiber woven fabric, a fiber nonwoven fabric, a fiber laminated fabric, a fiber knitted fabric, a resin sheet, a metal foil sheet, and an inorganic fiber.

In a preferred embodiment, the composite sheet of the present invention includes the substrate and foamed layers which are respectively provided on both surface sides of the substrate.

In a preferred embodiment, the composite sheet of the present invention has a total thickness of 0.5 mm or less.

Advantageous Effects of Invention

According to the present invention, it is possible to provide the novel composite sheet, including a substrate and a foamed layer which is provided on at least one surface side of the substrate, at a low cost in an environment-friendly manner, in which the composite sheet includes a foamed layer having a uniform fine-cell structure, the average pore diameter of each of spherical cells of the foamed layer can be precisely controlled to a small one, the control range of the density of the foamed layer is wide, the control range of the thickness of the foamed layer is wide, and the composite sheet can express an excellent mechanical strength and is preferably excellent in toughness and heat resistance.

The composite sheet of the present invention includes a foamed layer having precisely controlled three-dimensional network structure, and hence can express excellent heat resistance and excellent mechanical physical properties.

The composite sheet of the present invention can be continuously provided while the surface layer shape and thickness of the foamed layer are controlled by forming a W/O type emulsion into a sheet shape, followed by polymerization and dehydration.

The composite sheet of the present invention can be provided through continuous steps in a commercially significant scale.

The W/O type emulsion which may be used for obtaining the foamed layer included in the composite sheet of the present invention has excellent emulsifiability and excellent static storage stability even when an emulsifying agent or the like is not positively added, and hence can stably provide the composite sheet of the present invention.

The W/O type emulsion which may be used for obtaining the foamed layer included in the composite sheet of the present invention is preferably prepared through use of a mixed syrup including a hydrophilic polyurethane-based polymer synthesized in an ethylenically unsaturated monomer because it is not necessary to use an organic solvent as an environmental load substance or it is possible to reduce the usage of the organic solvent.

Brief Description of Drawings

[FIG. **1**] A cross-sectional view illustrating one exemplary preferred embodiment of a composite sheet of the present invention.

[FIG. **2**] A cross-sectional view illustrating another exemplary preferred embodiment of the composite sheet of the present invention.

[FIG. **3**] A photographic view of a cross-sectional SEM photograph of a composite sheet produced in Example A-1.

[FIG. **4**] A photographic view of a surface/cross-sectional SEM photograph of the composite sheet produced in Example A-1 taken from an oblique direction.

[FIG. **5**] A photographic view of a cross-sectional SEM photograph of a foamed layer of the composite sheet produced in Example A-1.

[FIG. **6**] A photographic view of another cross-sectional SEM photograph of the foamed layer of the composite sheet produced in Example A-1.

[FIG. **7]** A photographic view of a cross-sectional SEM photograph of a foamed layer of a composite sheet produced in Example A-7.

[FIG. **8**] A photographic view of a cross-sectional SEM photograph of a foamed layer of a composite sheet produced in Example B-1.

[FIG. **9**] A photographic view of a cross-sectional SEM photograph of a foamed layer of a composite sheet produced in Example B-2.

[FIG. **10**] A photographic view of a cross-sectional SEM photograph of a foamed layer of a composite sheet produced in Example B-3.

[FIG. **11**] A photographic view of a surface/cross-sectional SEM photograph of a foamed layer of a composite sheet produced in Example B-4 taken from an oblique direction.

[FIG. **12**] A photographic view of a surface/cross-sectional SEM photograph of a foamed layer of a composite sheet produced in Example B-5 taken from an oblique direction.

[FIG. **13]** A photographic view of a cross-sectional SEM photograph of a foamed layer of a composite sheet produced in Comparative Example B-1.

[FIG. **14]** A photographic view of a cross-sectional SEM photograph of a foamed layer of a composite sheet produced in Comparative Example B-2.

[FIG. **15**] A photographic view of a cross-sectional SEM photograph of a foamed layer of a composite sheet produced in Comparative Example B-3.

[FIG. **16]** A photographic view of a cross-sectional SEM photograph of a foamed layer of a composite sheet produced in Comparative Example B-4.

[FIG. **17**] A photographic view of a cross-sectional SEM photograph of a foamed layer of the composite sheet of the present invention, the photographic view clearly showing an open-cell structure in which through-holes are present between adjacent spherical cells.

Description of Embodiments

««A. Composite sheet»»

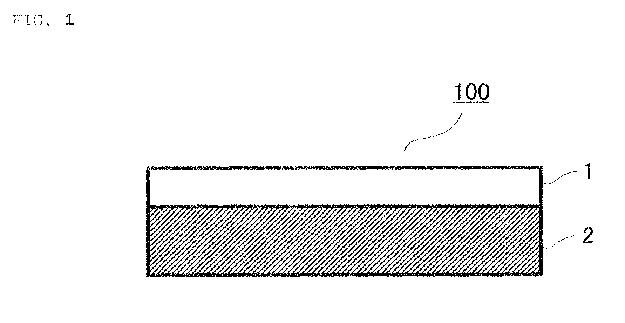

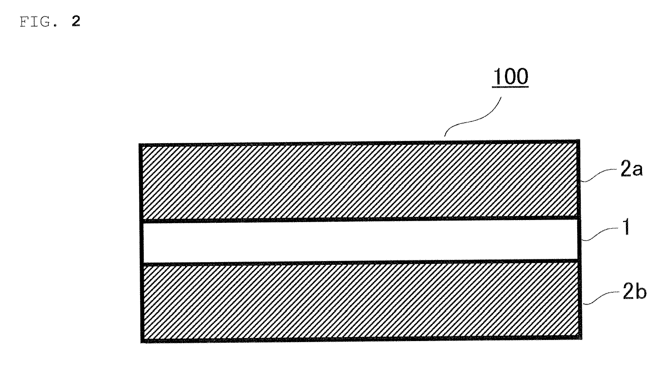

A composite sheet of the present invention includes a substrate and a foamed layer which is provided on at least one surface side of the substrate. That is, a composite sheet **100** of the present invention may include a substrate **1** and a foamed layer **2** which is provided on one surface side of the substrate as illustrated in FIG. **1,** or may include the substrate **1** and foamed layers **2a** and **2b** which are respectively provided on both surface sides of the substrate as illustrated in FIG. **2.** Further, the composite sheet of the present invention may include any appropriate other layer in such a range that the effects of the present invention are not impaired. It should be noted that, when the composite sheet of the present invention has a sheet shape, its thickness and long and short side lengths may each be any appropriate value.

Any appropriate total thickness may be adopted as the total thickness of the composite sheet of the present invention in such a range that the effects of the present invention are not impaired. For example, the upper limit value of the total thickness of the composite sheet of the present invention is preferably 0.5 mm, and the lower limit value thereof is preferably 0.01 mm. When the total thickness of the composite sheet of the present invention falls within the range, a novel composite sheet which can express an excellent mechanical strength while the range of the thickness of the foamed layer is controlled to a wide one can be provided.

<<A-1. Substrate>>

Any appropriate substrate may be adopted as the substrate in such a range that the effects of the present invention are not impaired. Examples of such substrate include a fiber woven fabric, a fiber nonwoven fabric, a fiber laminated fabric, a fiber knitted fabric, a resin sheet, a metal foil sheet, and an inorganic fiber. Any appropriate thickness may be adopted as the thickness of the substrate depending on materials and purposes.

A woven fabric formed of any appropriate fiber may be adopted as the fiber woven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber woven fabric may be subjected to metallic processing through plating, sputtering, or the like.

A nonwoven fabric formed of any appropriate fiber may be adopted as the fiber nonwoven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber nonwoven fabric may be subjected to metallic processing through plating, sputtering, or the like. A more specific example of the fiber nonwoven fabric is a spunbond nonwoven fabric.

A laminated fabric formed of any appropriate fiber may be adopted as the fiber laminated fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further,thefiber laminated fabric may be subjected to metallic processing through plating, sputtering, or the like. A more specific example of the fiber laminated fabric is a polyester fiber laminated fabric.

A knitted fabric formed of any appropriate fiber may be adopted as the fiber knitted fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further,thefiber knitted fabric may be subjected to metallic processing through plating, sputtering, or the like.

A sheet formed of any appropriate resin may be adopted as the resin sheet. Examples of such resin include a thermoplastic resin. The resin sheet may be subjected to metallic processing through plating, sputtering, or the like.

A sheet formed of any appropriate metal foil may be adopted as the metal foil sheet.

Any appropriate inorganic fiber may be adopted as the inorganic fiber. Specific examples of such inorganic fiber include a glass fiber, a metal fiber, and a carbon fiber.

In the composite sheet of the present invention, when voids are present in the substrate, the same material as that for the foamed layer may be present in part or all of the voids. That is, in the composite sheet of the present invention, when the substrate is a substrate having voids such as a fiber woven fabric, a fiber nonwoven fabric, a fiber laminated fabric, a fiber knitted fabric, or an inorganic fiber, the same material as that for the foamed layer may be present in part or all of the voids in the lamination of the substrate and the formed layer.

The substrates may be used alone or in combination.

<<A-2. Foamed layer>>

Any appropriate foammay be adopted as a material for the foamed layer in such a range that the effects of the present invention are not impaired. Examples of the material for the foamed layer include a foam of a poly(meth)acrylic resin, a foam of a polyurethane-based resin, and a foam based on a composite resin thereof.

The foamed layer has spherical cells. It should be noted that the "spherical cells" as used herein do not need to be true spherical cells in a strict sense, and for example, may be substantially spherical cells each partially having a strain or cells each formed of a space having a large strain.

The spherical cells which the foamed layer has each have an average pore diameter of less than 30 $\mu$m, preferably 20 $\mu$m or less, more preferably less than 20 $\mu$m, still more preferably 15 $\mu$m or less, particularly preferably 10 $\mu$m or less. The lower limit value of the average pore diameter of each of the spherical cells which the foamed layer has is not particularly limited, and for example, is preferably 0.01 $\mu$m, more preferably 0.1 $\mu$m, still more preferably 1 $\mu$m. When the average pore diameter of each of the spherical cells which the foamed layer has falls within the range, the average pore diameter of each of the spherical cells of the foamed layer can be precisely controlled to a small one, and a composite sheet which can express an excellent mechanical strength and is preferably excellent in toughness and heat resistance can be provided.

The foamed layer has a density of 0.1 g/cm$^3$ to 0. 9 g/cm$^3$, preferably 0.1 g/cm$^3$ to 0.7 g/cm$^3$, more preferably 0.1 g/cm$^3$ to 0. 5 g/cm$^3$, still more particularly preferably 0.15 g/cm$^3$ to 0.5 g/cm$^3$. When the density of the foamed layer falls within the range, while the range of the density of the foamed layer is controlled to a wide one, a novel composite sheet which can express an excellent mechanical strength and is preferably excellent in toughness and heat resistance can be provided.

The foamed layer may have an open-cell structure in which through-holes are present between adjacent spherical cells. The open-cell structure may be an open-cell structure in which through-holes are present between most or all of adjacent spherical cells, or may be a semi-closed and semi-open-cell structure in which the number of through-holes is relatively small.

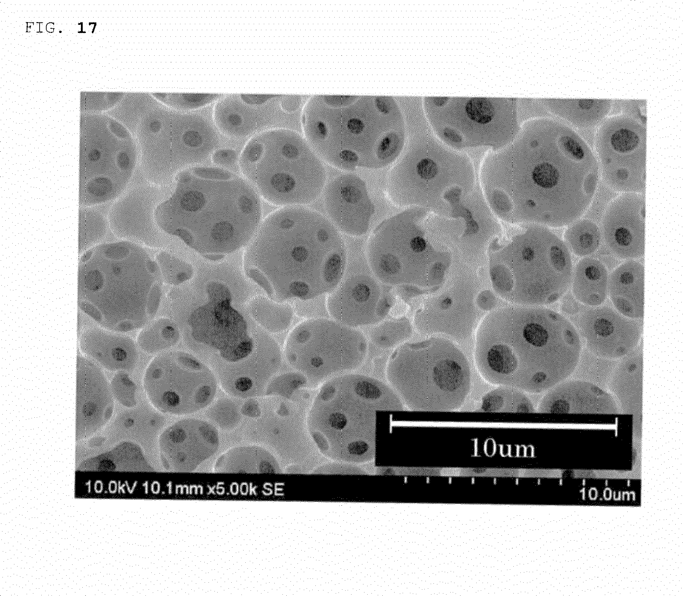

The through-holes present between the adjacent spherical cells affect the physical properties of the foamed layer. For example, there is a tendency that, as the average pore diameter of each of the through-holes becomes smaller, the strength of the foam becomes higher. FIG. **17** shows a photographic view of a cross-sectional SEM photograph of the foamed layer of the composite sheet of the present invention, the photographic view clearly showing an open-cell structure in which through-holes are present between adjacent spherical cells.

The average pore diameter of each of the through-holes present between the adjacent spherical cells is preferably 5 $\mu$m or less, more preferably 4 $\mu$m or less, still more preferably 3 $\mu$m or less. The lower limit value of the average pore diameter of each of the through-holes present between the adjacent spherical cells is not particularly limited, and for example, is preferably 0.001 $\mu$m, more preferably 0.01 $\mu$m. When the average pore diameter of each of the through-holes present between the adjacent spherical cells falls within the range, a novel composite sheet which can express an excellent mechanical strength and is preferably excellent in toughness and heat resistance can be provided.

The foamed layer preferably has surface openings.

When the foamed layer has surface openings, the upper limit of the average pore diameter of each of the surface openings is preferably 5 $\mu$m, more preferably 4 $\mu$m, still more preferably 3 $\mu$m. The lower limit value of the average pore diameter of each of the surface openings is not particularly limited, and for example, is preferably 0.001 $\mu$m, more preferably 0.01 $\mu$m. When the average pore diameter of each of the surface openings falls within the range, a novel composite sheet which can express an excellent mechanical strength and is preferably excellent in toughness and heat resistance can be provided.

The composite sheet of the present invention is preferably crack-free in a 180° bending test. The fact indicates that the composite sheet of the present invention preferably has very excellent toughness.

The composite sheet of the present invention has a rate of dimensional change of preferably less than ±5%, more preferably ±3% or less, still more preferably ±1% or less, when stored at 125°C for 22 hours. When the rate of dimensional change in the composite sheet of the present invention stored at 125°C for 22 hours falls within the range, the composite sheet of the present invention can have very excellent heat resistance.

The composite sheet of the present invention has a rate of change in tensile strength of preferably less than ±20%, more preferably ±18% or less, when stored at 125°C for 14 days. When the rate of change in tensile strength in the composite sheet of the present invention stored at 125°C for 14 days falls within the range, the composite sheet of the present invention can have very excellent heat resistance.

The composite sheet of the present invention has a tensile strength of preferably 0.1 MPa or more, more preferably 0.15 MPa or more, still more preferably 0.2 MPa or more. When the tensile strength in the composite sheet of the present invention falls within the range, the composite sheet of the present invention can have very excellent mechanical physical properties.

The composite sheet of the present invention has a 50% compression load of preferably 3,000 kPa or less, more preferably 1, 000 kPa or less, still more preferably 200 kPa or less. When the 50% compression load in the composite sheet of the present invention falls within the range, the composite sheet of the present invention can have very excellent flexibility.

««B. Production method for composite sheet»»

The composite sheet of the present invention may be produced by any appropriate method. Typically, the composite sheet of the present invention may be preferably produced by forming a W/O type emulsion into a shape and polymerizing the emulsion, thereby forming a foamed layer, on one surface side or each of both surface sides of a substrate.

<<B-1. W/O type emulsion>>

A W/O type emulsion which maybe used for obtaining the composite sheet of the present invention is a W/O type emulsion including a continuous oil phase component and an aqueous phase component immiscible with the continuous oil phase component. More specifically, the W/O type emulsion which may be used for obtaining the composite sheet of the present invention is obtained by dispersing the aqueous phase component in the continuous oil phase component.

The ratio of the aqueous phase component to the continuous oil phase component in the W/O type emulsion which may be used for obtaining the composite sheet of the present invention may be any appropriate ratio in such a range that the W/O type emulsion can be formed. The ratio of the aqueous phase component to the continuous oil phase component in the W/O type emulsion which may be used for obtaining the composite sheet of the present invention can serve as an important factor for determining structural, mechanical, and performance characteristics of a porous polymer material to be obtained by the polymerization of the W/O type emulsion. Specifically, the ratio of the aqueous phase component to the continuous oil phase component in the W/O type emulsion which may be used for obtaining the composite sheet of the present invention can serve as an important factor for determining, for example, the density, cell size, cell structure, and dimensions of a wall body for forming a porous structure of a porous polymer material to be obtained by the polymerization of the W/O type emulsion.

The lower limit value of the ratio of the aqueous phase component in the W/O type emulsion which may be used for obtaining the composite sheet of the present invention is preferably 30 wt%, more preferably 40 wt%,still more preferably 50 wt%, particularly preferably 55 wt%, and the upper limit value thereof is preferably 95 wt%, more preferably 90 wt%, still more preferably 85 wt%, particularly preferably 80 wt%. When the ratio of the aqueous phase component in the W/O type emulsion which may be used for obtaining the composite sheet of the present invention falls within the range, the effects of the present invention can be sufficiently expressed.

The W/O type emulsion which may be used for obtaining the composite sheet of the present invention may include any appropriate additive in such a range that the effects of the present invention are not impaired. Examples of such additive include: a tackifier resin; talc; fillers such as calcium carbonate, magnesium carbonate, silicic acid and salts thereof, clay, mica powder, aluminum hydroxide, magnesium hydroxide, zinc oxide, bentonite, carbon black, silica, alumina, aluminum silicate, acetylene black, and aluminum powder; a pigment; and a dye. Such additives may be used alone or in combination.

<B-1-1. Aqueous phase component>

Any aqueous fluid substantially immiscible with the continuous oil phase component may be adopted as the aqueous phase component. Water such as ion-exchanged water is preferred from the viewpoints of ease of handling and low cost.

The aqueous phase component may include any appropriate additive in such a range that the effects of the present invention are not impaired. Examples of such additive include a polymerization initiator and a water-soluble salt. The water-solublesalt canserve as an effective additive for additionally stabilizing the W/O type emulsion which may be used for obtaining the composite sheet of the present invention. Examples of such water-soluble salt include sodium carbonate, calcium carbonate, potassium carbonate, sodium phosphate, calcium phosphate, potassium phosphate, sodium chloride, and potassium chloride. Such additives may be used alone or in combination. The additives which may be included in the aqueous phase component may be used alone or in combination.

<B-1-2. Continuous oil phase component>

The continuous oil phase component preferably includes an ethylenically unsaturated monomer, more preferably includes a hydrophilic polyurethane-based polymer and an ethylenically unsaturated monomer. When the continuous oil phase component includes a hydrophilic polyurethane-based polymer and an ethylenically unsaturated monomer, the contents of the hydrophilic polyurethane-based polymer and the ethylenically unsaturated monomer in the continuous oil phase component may each be any appropriate content in such a range that the effects of the present invention are not impaired.

The content of the hydrophilic polyurethane-based polymer, which depends on the ratio of polyoxyethylene in a polyoxyethylene polyoxypropylene glycol unit constituting the hydrophilic polyurethane-based polymer or the amount of the aqueous phase component to be compounded, is as described below, for example. The hydrophilic polyurethane-based polymer is preferably contained in the range of 10 to 30 parts by weight with respect to 70 to 90 parts by weight of the ethylenically unsaturated monomer, and the hydrophilic polyurethane-based polymer is more preferably contained in the range of 10 to 25 parts by weight with respect to 75 to 90 parts by weight of the ethylenically unsaturated monomer. Further, for example, the hydrophilic polyurethane-based polymer is preferably contained in the range of 1 to 30 parts by weight, and the hydrophilic polyurethane-based polymer is more preferably contained in the range of 1 to 25 parts by weight, with respect to 100 parts by weight of the aqueous phase component. When the content of the hydrophilic polyurethane-based polymer falls within the range, the effects of the present invention can be sufficiently expressed.

(B-1-2-1. Hydrophilic polyurethane-based polymer)

The hydrophilic polyurethane-based polymer includes a polyoxyethylene polyoxypropylene unit derived from polyoxyethylene polyoxypropylene glycol, and the polyoxyethylene polyoxypropylene unit contains 5 wt% to 25 wt% of polyoxyethylene.

The content of the polyoxyethylene in the polyoxyethylene polyoxypropylene unit is 5 wt% to 25 wt% as described above, the lower limit value thereof is preferably 7 wt%, more preferably 10 wt%, and the upper limit value thereof is preferably 25 wt%, more preferably 20 wt%. The polyoxyethylene in the polyoxyethylene polyoxypropylene unit expresses an effect of stably dispersing an aqueous phase component in a continuous oil phase component. When the content of the polyoxyethylene in the polyoxyethylene polyoxypropylene unit is less than 5 wt%, it may become difficult to stably disperse the aqueous phase component in the continuous oil phase component. When the content of the polyoxyethylene in the polyoxyethylene polyoxypropylene unit is more than 25 wt%, as the condition becomes closer to an HIPE condition, phase transition from a W/O type emulsion to an oil-in-water type (O/W type) emulsion may occur.

A conventional hydrophilic polyurethane-based polymer is obtained by subjecting a diisocyanate compound, a hydrophobic long-chain diol, polyoxyethylene glycol and a derivative thereof, and a low-molecular active hydrogen compound (chain extension agent) to a reaction. However, the number of polyoxyethylene groups included in the hydrophilic polyurethane-based polymer obtained by such method is non-uniform, and hence a W/O type emulsion including such hydrophilic polyurethane-based polymer may have lowered emulsification stability. On the other hand, the hydrophilic polyurethane-based polymer included in the continuous oil phase component of the W/O type emulsion which may be used for obtaining the composite sheet of the present invention has such a characteristic structure as described above. Hence, in the case where the hydrophilic polyurethane-based polymer is incorporated into the continuous oil phase component of the W/O type emulsion, excellent emulsifiability and excellent static storage stability can be expressed even when an emulsifying agent or the like is not positively added.

The hydrophilic polyurethane-based polymer is preferably obtained by subjecting polyoxyethylene polyoxypropylene glycol and a diisocyanate compound to a reaction. In this case, the lower limit value of the ratio of the polyoxyethylene polyoxypropylene glycol and the diisocyanate compound in terms of NCO/OH (equivalent ratio) is preferably 1, more preferably 1.2, still more preferably 1.4, and the upper limit value thereof is preferably 3, more preferably 2.5, still more preferably 2. When the ratio in terms of NCO/OH (equivalent ratio) is less than 1, a gelled product may be liable to be generated in the production of the hydrophilic polyurethane-based polymer. When the ratio in terms of NCO/OH (equivalent ratio) is more than 3, the remaining amount of the diisocyanate compound increases, which may make the W/O type emulsion which may be used for obtaining the composite sheet of the present invention unstable.

Examples of the polyoxyethylene polyoxypropylene glycol include polyether polyols manufactured by ADEKA CORPORATION (ADEKA (trademark) Pluronic L-31, L-61, L-71, L-101, L-121, L-42, L-62, L-72, L-122, 25R-1, 25R-2, and 17R-2), and polyoxyethylene polyoxypropylene glycols manufactured by NOF CORPORATION (PLONON (trademark) 052, 102, and 202). The polyoxyethylene polyoxypropylene glycols may be used alone or in combination.

Examples of the diisocyanate compound include aromatic, aliphatic, and alicyclic diisocyanates, dimers and trimers of these diisocyanates, and polyphenylmethane polyisocyanate. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate. Examples of the trimers of the diisocyanates include an isocyanurate type, a biuret type, and an allophanate type. The diisocyanate compounds may be used alone or in combination.

The kind, combination, or the like of the diisocyanate compounds has only to be appropriately selected from the viewpoint of, for example, urethane reactivity with polyol. An alicyclic diisocyanate is preferably used from the viewpoints of, for example, rapid urethane reactivity with polyol and suppression of a reaction with water.

The lower limit value of the weight average molecular weight of the hydrophilic polyurethane-based polymer is preferably 5,000, more preferably 7,000, still more preferably 8,000, particularly preferably 10,000, and the upper limit value thereof is preferably 50,000, more preferably 40,000, still more preferably 30,000, particularly preferably 20,000.

The hydrophilic polyurethane-based polymer may have a radically polymerizable unsaturated double bond at a terminal thereof. By virtue of the fact that the hydrophilic polyurethane-based polymer has a radically polymerizable unsaturated double bond at a terminal thereof, the effects of the present invention can be additionally expressed.

(B-1-2-2. Ethylenically unsaturated monomer)

Any appropriate monomer may be adopted as the ethylenically unsaturated monomer as long as the monomer has an ethylenically unsaturated double bond. The ethylenically unsaturated monomers may be used alone or in combination.

The ethylenically unsaturated monomer preferably includes a (meth)acrylic acid ester. The lower limit value of the content of the (meth)acrylic acid ester in the ethylenically unsaturated monomer is preferably 80 wt%, more preferably 85 wt%, and the upper limit value thereof is preferably 100 wt%, more preferably 98 wt%. The (meth) acrylic acid esters may be used alone or in combination.

The (meth)acrylic acid ester is preferably an alkyl (meth)acrylate having an alkyl group (concept encompassing a cycloalkyl group, an alkyl(cycloalkyl) group, and a (cycloalkyl) alkyl group as well) having 1 to 20 carbon atoms. The alkyl group preferably has 4 to 18 carbon atoms. It should be noted that the term "(meth)acrylic" means acrylic and/or methacrylic, and the term " (meth) acrylate" means acrylate and/or methacrylate.

Examples of the alkyl (meth)acrylate having an alkyl group having 1 to 20 carbon atoms include methyl (meth) acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, lauryl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and isostearyl (meth)acrylate. Of those, n-butyl (meth)acrylate and 2-ethylhexyl (meth)acrylate are preferred. The alkyl (meth)acrylates each having an alkyl group having 1 to 20 carbon atoms may be used alone or in combination.

The ethylenically unsaturated monomer preferably further contains a polar monomer copolymerizable with the (meth) acrylic acid ester. The lower limit value of the content of the polar monomer in the ethylenically unsaturated monomer is preferably 0 wt%, more preferably 2 wt%, and the upper limit value thereof is preferably 20 wt%, more preferably 15 wt%. The polar monomers may be used alone or in combination.

Examples of the polar monomer include: carboxyl group-containing monomers such as (meth)acrylic acid, carboxyethyl (meth)acrylate, carboxypentyl (meth)acrylate, $\omega$-carboxy-polycaprolactone monoacrylate, phthalic acid monohydroxyethyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth) acrylate, 10-hydroxydecyl (meth)acrylate, 12-hydroxylauryl (meth)acrylate, and (4-hydroxymethylcyclohexyl)methyl (meth)acrylate; and amide group-containing monomers such as N,N-dimethyl(meth)acrylamide and N,N-diethyl(meth) acrylamide.

(B-1-2-3. Other components in continuous oil phase component)

The continuous oil phase component may include any appropriate other component in such a range that the effects of the present invention are not impaired. Typical preferred examples of such other component include a polymerization initiator, a cross-linking agent, a catalyst, an antioxidant, and an organic solvent. Such other components may be used alone or in combination.

Examples of the polymerization initiator include a radical polymerization initiator and a redox polymerization initiator. Examples of the radical polymerization initiator include a thermal polymerization initiator and a photopolymerization initiator.

Examples of the thermal polymerization initiator include an azo compound, a peroxide, peroxycarbonic acid, a peroxycarboxylic acid, potassium persulfate, t-butyl peroxyisobutyrate, and 2,2'-azobisisobutyronitrile.

Examples of the photopolymerization initiator may include: acetophenone-based photopolymerization initiators such as 4-(2-hydroxyethoxy)phenyl (2-hydroxy-2-propyl) ketone (e.g., a product available under the trade name Darocur-2959 from Ciba Japan), $\alpha$-hydroxy-$\alpha,\alpha'$-dimethylacetophenone (e.g., a product available under the trade name Darocur-1173 from Ciba Japan), methoxyacetophenone, 2,2-dimethoxy-1,2-diphenylethan-1-one (e.g., a product available under the trade name IRGACURE-651 from Ciba Japan), and 1-hydroxycyclohexyl-phenyl-ketone (e.g., a product available under the trade name IRGACURE-184 from Ciba Japan); ketal-based photopolymerization initiators such as benzyl dimethyl ketal; other halogenated ketones; acylphosphine oxides (e.g., a product available under the trade name IRGACURE-819 from Ciba Japan) ; and oxide ester-based photopolymerization initiators (e.g., products available under the trade names IRGACURE-OXE01 and Igracure-OXE02 from Ciba Japan).

The polymerization initiators may be used alone or in combination.

The lower limit value of the content of the polymerization initiator is preferably 0.05 wt%, more preferably 0.1 wt%, and the upper limit value thereof is preferably 5.0 wt%, more preferably 1.0 wt%, with respect to the whole continuous oil phase component. When the content of the polymerization initiator is less than 0.05 wt% with respect to the whole continuous oil phase component, the amount of unreacted monomer components increases, with the result that the amount of monomers remaining in a porous material to be obtained may increase. When the content of the polymerization initiator is more than 5.0 wt% with respect to the whole continuous oil phase component, the mechanical physical properties of a porous material to be obtained may lower.

It should be noted that the amount of radicals generated by the photopolymerization initiator varies depending on, for example, the kind, intensity, and irradiation time of irradiation light and the amount of dissolved oxygen in a mixture of a monomer and a solvent as well. In addition, when the amount of dissolved oxygen is large, the amount of radicals generated by the photopolymerization initiator is suppressed, and thus polymerization does not sufficiently proceed, with the result that the amount of an unreacted product may increase. Accordingly, it is preferred to blow inert gas such as nitrogen into a reaction system to replace oxygen by the inert gas or to perform degassing by reduced pressure treatment in advance before photoirradiation.

The cross-linking agent is typically used for constructing a more three-dimensional molecular structure by linking polymer chains together. The selection of the kind and content of the cross-linking agent is influenced by structural characteristics, mechanical characteristics, and fluid treatment characteristics desired for a porous material to be obtained. The selection of the specific kind and content of the cross-linking agent is important for realizing a desired combination of the structural characteristics, mechanical characteristics, and fluid treatment characteristics of the porous material.

The cross-linking agents may be used alone or in combination.

In the production of the composite sheet of the present invention, at least two kinds of cross-linking agents having different weight average molecular weights are each preferably used as the cross-linking agent.

In the production of the composite sheet of the present invention, it is more preferred to use, as the cross-linking agent, "one or more kinds selected from a polyfunctional (meth)acrylate, a polyfunctional (meth)acrylamide, and a polymerization-reactive oligomer each having a weight average molecular weight of 800 or more" in combination with "one or more kinds selected from a polyfunctional (meth)acrylate and a polyfunctional (meth)acrylamide each having a weight average molecular weight of 500 or less." Herein, the polyfunctional (meth)acrylate specifically refers to a polyfunctional (meth)acrylate having at least two ethylenically unsaturated groups per molecule, and the polyfunctional (meth)acrylamide specifically refers to a polyfunctional (meth)acrylamide having at least two ethylenically unsaturated groups per molecule.

Examples of the polyfunctional (meth)acrylate include diacrylates, triacrylates, tetraacrylates, dimethacrylates, trimethacrylates, and tetramethacrylates.

The polyfunctional (meth) acrylate may be derived from, for example, a diol, a triol, a tetraol, or a bisphenol A derivative. Specifically, the polyfunctional (meth)acrylate may be derived from, for example, 1,10-decanediol, 1,8-octanediol, 1,6-hexane-diol, 1,4-butanediol, 1,3-butanediol, 1,4-but-2-enediol, ethylene glycol, diethylene glycol, trimethylolpropane, pentaerythritol, hydroquinone, catechol, resorcinol, triethylene glycol, polyethylene glycol, sorbitol, polypropylene glycol, polytetramethylene glycol, or a propylene oxide-modified product of bisphenol A.

Examples of the polyfunctional (meth)acrylamide include diacrylamides, triacrylamides, tetraacrylamides, dimethacrylamides, trimethacrylamides, and tetramethacrylamides.

The polyfunctional (meth)acrylamide may be derived from, for example, its corresponding diamine, triamine, or tetraamine.

Examples of the polymerization-reactive oligomer include urethane (meth)acrylate, epoxy (meth)acrylate, copolyester (meth)acrylate, and oligomer di(meth)acrylate. Hydrophobic urethane (meth)acrylate is preferred.

The weight average molecular weight of the polymerization-reactive oligomer is preferably 1,500 or more, more preferably 2,000 or more. The upper limit of the weight average molecular weight of the polymerization-reactive oligomer is not particularly limited, but is, for example, preferably 10,000 or less.

Examples of the cross-linking agent which may be used other than the foregoing include urethane (meth)acrylate, epoxy (meth)acrylate, copolyester (meth)acrylate, and oligomer di(meth)acrylate.

The lower limit value of the content of the cross-linking agent is preferably 10 wt%, more preferably 20 wt%, still more preferably 30 wt%, and the upper limit value thereof is preferably 80 wt%, more preferably 70 wt%, still more preferably 65 wt%, with respect to the total amount of the hydrophilic polyurethane-based polymer and the ethylenically unsaturated monomer. When the content of the cross-linking agent is less than 10 wt% with respect to the total amount of the hydrophilic polyurethane-based polymer and the ethylenically unsaturated monomer, most of a cell structure may collapse owing to shrinkage in association with a reduction in heat resistance in the step of dehydrating a high-water-content cross-linked polymer. When the content of the cross-linking agent is more than 80 wt% with respect to the total amount of the hydrophilic polyurethane-based polymer and the ethylenically unsaturated monomer, the mechanical characteristics of a porous material to be obtained may lower.

When the "one or more kinds selected from a polyfunctional (meth)acrylate, apolyfunctional (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate, a polyfunctional (meth)acrylamide, and a polymerization-reactive oligomer each having a weight average molecular weight of 800 or more" is preferably 30 wt%, and the upper limit value thereof is preferably 100 wt%, more preferably 80 wt%, with respect to the total amount of the hydrophilic polyurethane-based polymer and the ethylenically unsaturated monomer in the continuous oil phase component. When the usage of the "one or more kinds selected from a polyfunctional (meth)acrylate, a polyfunctional (meth)acrylamide, and a polymerization-reactive oligomer each having a weight average molecular weight of 800 or more" is less than 30 wt% with respect to the total amount of the hydrophilic polyurethane-based polymer and the ethylenically unsaturated monomer in the continuous oil phase component, the cohesive strength of a foamed layer to be obtained may lower, and it may become difficult to achieve both of toughness and flexibility. When the usage of the "one or more kinds selected from a polyfunctional (meth)acrylate, a polyfunctional (meth)acrylamide, and a polymerization-reactive oligomer each having a weight average molecular weight of 800 or more" is more than 100 wt% with respect to the total amount of the hydrophilic polyurethane-based polymer and the ethylenically unsaturated monomer in the continuous oil phase component, the emulsification stability of the W/O type emulsion lowers, with the result that a desired foamed layer may not be obtained.

When the "one or more kinds selected from a polyfunctional (meth)acrylate, a polyfunctional (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate and a polyfunctional (meth)acrylamide each having a weight average molecular weight of 500 or less" is preferably 1 wt%, more preferably 5 wt%, and the upper limit value thereof is preferably 30 wt%, more preferably 20 wt%, with respect to the total amount of the hydrophilic polyurethane-based polymer and the ethylenically unsaturated monomer in the continuous oil phase component. When the usage of the "one or more kinds selected from a polyfunctional (meth) acrylate and a polyfunctional (meth) acrylamide each having a weight average molecular weight of 500 or less" is less than 1 wt% with respect to the total amount of the hydrophilic polyurethane-based polymer and the ethylenically unsaturated monomer in the continuous oil phase component, heat resistance lowers, with the result that a cell structure may collapse owing to shrinkage in a step (IV) of dehydrating a water-containing polymer. When the usage of the "one or more kinds selected from a polyfunctional (meth)acrylate and a polyfunctional (meth)acrylamide each having a weight average molecular weight of 500 or less" is more than 30 wt% with respect to the total amount of the hydrophilic polyurethane-based polymer and the ethylenically unsaturated monomer in the continuous oil phase component, the toughness of a foamed layer to be obtained lowers, with the result that the foamed layer may exhibit brittleness.

The continuous oil phase component may include any appropriate other component in such a range that the effects of the present invention are not impaired. Typical preferred examples of such other component include a catalyst, an antioxidant, a light stabilizing agent, and an organic solvent. Such other components may be used alone or in combination.

Examples of the catalyst include a urethane reaction catalyst. Any appropriate catalyst may be adopted as the urethane reaction catalyst. Specific examples thereof include dibutyltin dilaurate.

Any appropriate content may be adopted as the content of the catalyst depending on a catalytic reaction of interest.

The catalysts may be used alone or in combination.

Examples of the antioxidant include a phenol-based antioxidant, a thioether-based antioxidant, and a phosphorus-based antioxidant.

Any appropriate content may be adopted as the content of the antioxidant in such a range that the effects of the present invention are not impaired.

The antioxidants may be used alone or in combination.

Examples of the light stabilizing agent include UV absorbing agents such as a benzotriazole-based compound, a benzophenone-based compound, a salicylate-based compound, a cyanoacrylate-based compound, a nickel-based compound, and a triazine-based compound, and a hindered amine-based light stabilizing agent. Of those light stabilizing agents, a benzotriazole-based compound UV absorbing agent and a hindered amine-based light stabilizing agent are preferred. Specific examples of such benzotriazole-based compound UV absorbing agent and hindered amine-based light stabilizing agent include a "TINUVIN" series manufactured by BASF.

Any appropriate content may be adopted as the content of the light stabilizing agent in such a range that the effects of the present invention are not impaired. For example, the content of the light stabilizing agent is preferably 0.01 wt% to 10 wt%, more preferably 0.1 to 5 wt%, with respect to the whole continuous oil phase component.

The light stabilizing agents may be used alone or in combination.

Any appropriate organic solvent may be adopted as the organic solvent in such a range that the effects of the present invention are not impaired.

Any appropriate content may be adopted as the content of the organic solvent in such a range that the effects of the present invention are not impaired.

The organic solvents may be used alone or in combination.

«B-2. Production method for W/O type emulsion»

Any appropriate method may be adopted as a production method for the W/O type emulsion which may be used for obtaining the composite sheet of the present invention. Examples of the production method for the W/O type emulsion which may be used for obtaining the composite sheet of the present invention include: a "continuous method" involving forming the W/O type emulsion by continuously supplying an emulsifying machine with a continuous oil phase component and an aqueous phase component; and a "batch method" involving forming the W/O type emulsion by feeding an emulsifying machine with an appropriate amount of an aqueous phase component with respect to a continuous oil phase component and continuously supplying the emulsifying machine with the aqueous phase component with stirring.

In the production of the W/O type emulsion which may be used for obtaining the composite sheet of the present invention, as shearing means for obtaining an emulsion state, for example, there is given application of a high shearing condition using a rotor/stator mixer, a homogenizer, or a microfluidization apparatus. Further, as another shearing means for obtaining an emulsion state, for example, there is given shaking using an impeller mixer or a pin mixer, or gentle mixing of a continuous and dispersion phase through application of a low shearing condition using an electromagnetic stirrer bar.

As an apparatus for preparing the W/O type emulsion by the "continuous method," for example, there are given a static mixer, a rotor/stator mixer, and a pin mixer. It is also possible to achieve more vigorous stirring by increasing a stirring speed or by using an apparatus designed so as to disperse the aqueous phase component more finely in the W/O type emulsion in a mixing method.

As an apparatus for preparing the W/O type emulsion by the "batch method," for example, there are given, mixing or shaking by hand, a driven impeller mixer, and a three-propeller mixing blade.

Any appropriate method may be adopted as a preparation method for the continuous oil phase component. Typical preferred examples of the preparation method for the continuous oil phase component include a preparation method for a continuous oil phase component involving preparing a mixed syrup including a hydrophilic polyurethane-based polymer and an ethylenically unsaturated monomer and subsequently compounding the mixed syrup with a polymerization initiator, a cross-linking agent, and any other appropriate component.

Any appropriate method may be adopted as a preparation method for the hydrophilic polyurethane-based polymer. Typical examples of the preparation method for the hydrophilic polyurethane-based polymer include a preparation method involving subjecting polyoxyethylene polyoxypropylene glycol and a diisocyanate compound to a reaction in the presence of a urethane reaction catalyst.

<<B-3. Production method for composite sheet>>

The composite sheet of the present invention may be preferably produced by forming a W/O type emulsion into a shape and polymerizing the emulsion, thereby forming a foamed layer, on one surface side or each of both surface sides of a substrate.

As one preferred embodiment of the production method for the composite sheet of the present invention, there is given a mode of providing a composite sheet having a laminated structure of "substrate/foamed layer," the mode involving: applying a W/O type emulsion onto one surface of a substrate; polymerizing the W/O type emulsion by heating or irradiation with active energy rays under an inert gas atmosphere or in a state in which oxygen is blocked by covering with a UV-transmitting film coated with a releasing agent such as silicone to produce a water-containing polymer; and dehydrating the resultant water-containing polymer.

As another preferred embodiment of the production method for the composite sheet of the present invention, there is given a mode of providing a composite sheet having a laminated structure of "foamed layer/substrate/foamed layer," the mode involving: preparing two W/O type emulsion-applied sheets by applying a W/O type emulsion onto one surface of a UV-transmitting film coated with a releasing agent such as silicone; polymerizing the W/O type emulsion by heating or irradiation with active energy rays in a state in which a substrate is laminated on the applied surface of one out of the two W/O type emulsion-applied sheets and the other W/O type emulsion-applied sheet is laminated on the other surface of the laminated substrate so that its applied surface comes into contact with the substrate, thereby producing a water-containing polymer; and dehydrating the resultant water-containing polymer.

A method for the application of the W/O type emulsion onto one surface of the substrate or the UV-transmitting film coated with a releasing agent such as silicone is, for example, a roll coater, a die coater, or a knife coater.

The foamed layer in the composite sheet of the present invention can be preferably formed by a formation method involving:

a step (I) of preparing a W/O type emulsion;
a step (II) of forming the resultant W/O type emulsion into a shape; a step (III) of polymerizing the W/O type emulsion formed into a shape; and
a step (IV) of dehydrating the resultant water-containing polymer. Herein, at least part of the step (II) of forming the resultant W/O type emulsion into a shape and the step (III) of polymerizing the W/O type emulsion formed into a shape may be simultaneously performed.

In the step (II), any appropriate shape formation method may be adopted as the method of forming the W/O type emulsion into a shape. For example, there is given a method involving continuously supplying the W/O type emulsion on a moving belt and forming the emulsion into a flat sheet shape on the belt. Further, there is given a method involving applying the W/O type emulsion onto one surface of a thermoplastic resin film to form the emulsion into a shape.

In the step (II), when the method involving applying the W/O type emulsion onto one surface of a thermoplastic resin film to form the emulsion into a shape is adopted as the method of forming the W/O type emulsion into a shape, the application method is, for example, a method using a roll coater, a die coater, or a knife coater.

In the step (III), any appropriate polymerization method may be adopted as the method of polymerizing the W/O type emulsion formed into a shape. For example, there are given: a method involving continuously supplying the W/O type emulsion onto a moving belt having a structure in which a belt surface of a belt conveyor is warmed with a heating apparatus and polymerizing the emulsion by heating while forming the emulsion into a flat sheet shape on the belt; and a method involving continuously supplying the W/O type emulsion onto a moving belt having a structure in which a belt surface of a belt conveyor is warmed by irradiation with active energy rays and polymerizing the emulsion by irradiation with active energy rays while forming the emulsion into a flat sheet shape on the belt.

When the polymerization is performed by heating, the lower limit value of a polymerization temperature (heating temperature) is preferably 23°C, more preferably 50°C, still more preferably 70°C, particularly preferably 80°C, most preferably 90°C, and the upper limit value thereof is preferably 150°C, more preferably 130°C, still more preferably 110°C. When the polymerization temperature is less than 23°C, it takes a long time to perform the polymerization, with the result that industrial productivity may lower. When the polymerization temperature is more than 150°C, the pore diameters of a foamed layer to be obtained may become non-uniform, and the strength of the foamed layer may lower. It should be noted that the polymerization temperature does not need to be kept constant, and for example, may be changed in two stages or a plurality of stages during the polymerization.

When the polymerization is performed by irradiation with active energy rays, examples of the active energy rays include UV light, visible light, and electron beams. The active energy rays are preferably UV light and visible light, more preferably visible to UV light having a wavelength of 200 nm to 800 nm. The W/O type emulsion has a strong tendency to scatter light. Hence, when the visible to UV light having a wavelength of 200 nm to 800 nm is used, the light can pass through the W/O type emulsion. Further, a photopolymerization initiator which can be activated by the light having a wavelength of 200 nm to 800 nm is easily available, and a source for the light is also easily available.

The lower limit value of the wavelength of the active energy rays is preferably 200 nm, more preferably 300 nm, and the upper limit value thereof is preferably 800 nm, more preferably 450 nm.

As a typical apparatus to be used in the irradiation with active energy rays, for example, there is given, an apparatus having a spectrum distribution in a region having a wavelength of 300 to 400 nm as a UV lamp which can perform irradiation with UV light. Examples thereof include a chemical lamp, a Black Light lamp (manufactured by TOSHIBA LIGHTING & TECHNOLOGY CORPORATION, trade name), and a metal halide lamp.

An illuminance upon the irradiation with active energy rays maybe set to any appropriate illuminance by regulating a distance from an irradiation apparatus to an object to be irradiated and a voltage. For example, according to the method disclosed in JP 2003-13015 A, irradiation with UV light in each step can be performed in a plurality of divided stages, thereby precisely regulating the efficiency of a polymerization reaction.

In order to prevent oxygen having a polymerization-inhibiting action from causing an adverse influence, for example, the irradiation with UV light is preferably performed under an inert gas atmosphere after a W/O type emulsion has been applied onto one surface of a substrate such as a thermoplastic resin film and formed into a shape, or by covering with a film which transmits UV light but blocks oxygen, e.g., polyethylene terephthalate coated with a releasing agent such as silicone, after a W/O type emulsion has been applied onto one surface of a substrate such as a thermoplastic resin film and formed into a shape.

Any appropriate thermoplastic resin film may be adopted as the thermoplastic resin film as long as the W/O type emulsion can be applied onto one surface of the film and formed into a shape. Examples of the thermoplastic resin film include plastic films and sheets made of polyester, an olefin-based resin, and polyvinyl chloride.

The inert gas atmosphere refers to an atmosphere in which oxygen in a photoirradiation zone has been replaced by inert gas. Accordingly, the amount of oxygen present in the inert gas atmosphere needs to be as small as possible, and is preferably 5,000 ppm or less in terms of oxygen concentration.

In the step (IV), the resultant water-containing polymer is dehydrated. An aqueous phase component is present in a dispersed state in the water-containing polymer obtained in the step (III). The foamed layer included in the composite sheet of the present invention is obtained by removing the aqueous phase component through dehydration, followed by drying.

Any appropriate drying method may be adopted as the dehydration method in the step (IV). Examples of such drying method include vacuum drying, freeze drying, press drying, drying in a microwave oven, drying in a heat oven, drying with infrared rays, and combinations of these technologies.

««C. Functional composite sheet»»

The composite sheet of the present invention is applicable to, for example, functional composite sheets having various functions. Examples of such functional composite sheets include an adherent composite sheet, a diffuse reflective composite sheet, a chemical-resistant composite sheet, a high-resilience composite sheet, a high-airtight composite sheet, a heat-resistant impact-absorbing composite sheet, a liquid-absorbing open-cell porous composite sheet, a heat-resistant low-thermal conductive composite sheet, a weather-resistant composite sheet, and a water-repellent composite sheet.

Examples

Hereinafter, the present invention is described by way of examples. However, the present invention is not limited by these examples. It should be noted that normal temperature means 23°C.

(Measurement of molecular weight)

A weight average molecular weight was determined by gel permeation chromatography (GPC).

Apparatus: "HLC-8020" manufactured by Tosoh Corporation

Column: "TSKgel GMH$_{HR}$-H (20)" manufactured by Tosoh Corporation

Solvent: Tetrahydrofuran

Standard substance: Polystyrene

(Static storage stability of emulsion)

About 30 g of a prepared W/O type emulsion were weighed in a container having a volume of 50 ml. The emulsion was observed for its generation status of free water from immediately after the preparation, and evaluated for its static storage stability at normal temperature.

o: No free water was generated even after 24 hours

∆: A slight amount of free water was generated until 1 hour

x: Free water was generated until 1 hour

(Measurement of average pore diameter)

A produced composite sheet was cut in its thickness direction with a microtome cutter to prepare a sample for measurement. Images of the cut surface of the sample for measurement were taken at magnifications of 800 to 5, 000 with a low-vacuum scanning electron microscope (manufactured by Hitachi, Ltd., S-4800 or S-3400N). Through use of the resultant images, the long axis lengths of about 30 largest pores were measured for each of spherical cells, through-holes, and surface openings in any appropriate range, and an average of the measured values was defined as an average pore diameter.

(Variance of pore diameters)

A produced composite sheet was cut in its thickness direction with a microtome cutter to prepare a sample for measurement. Images of the cut surface of the sample for measurement were taken at magnifications of 800 to 5,000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter. The variance of pore diameters for each of the spherical cells, through-holes, and surface openings was calculated by Equation 1 through use of the determined average pore diameter value.

$$\text{Variance=Sum of (squares of (data - average))} \div \text{number}$$

$$\cdots \cdot \text{Equation 1}$$

(Standard deviation of pore diameters)

A produced composite sheet was cut in its thickness direction with a microtome cutter to prepare a sample for measurement. Images of the cut surface of the sample for measurement were taken at magnifications of 800 to 5,000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter. The standard deviation of pore diameters for each of the spherical cells, through-holes, and surface openings was calculated by Equation 2 through use of the variance calculated from the average pore diameter value.

$$\text{Standard deviation=Square root of (variance)} \cdots \cdot \text{Equation 2}$$

(Measurement of density of foamed layer)

A foamed layer of a produced composite sheet was cut into five test pieces each having a size of 1.00 mm by 100 mm. The weights were divided by the volumes to determine bulk densities. An average value of the resultant bulk densities was defined as a density of the foamed layer.

(Measurement of 50% compression load)

A produced composite sheet was measured for its 50% compression load in conformity with a compression load test of JIS-K-6767. A value when a test piece was compressed by 50% under the condition of a compression speed of 10 mm/min was defined as a value for the 50% compression load.

(Measurement of tensile strength)

A produced composite sheet was measured for its tensile strength at a tensile speed of 50 mm/min in conformity with JIS-K-7113.

(Measurement of rate of change in tensile strength)

A produced composite sheet was stored in an oven at 125°C for 14 days and then measured for its tensile strength at a tensile speed of 50 mm/min in conformity with JIS-K-7113, and a rate of change in tensile strength before and after the heating storage treatment was determined.

(Measurement of rate of dimensional change by heat)

A produced composite sheet was measured for its dimensional change by heating in conformity with the dimensional stability evaluation at high temperature of JIS-K-6767. That is, the produced composite sheet was cut into a test piece having a size of 100 mm by 100 mm, stored in an oven at 125°C for 22 hours, and then determined for its rate of dimensional change before and after the heating storage treatment in conformity with the dimensional stability evaluation at high temperature of JIS-K-6767.

(180° Bending test)

A produced composite sheet was cut in its machine direction (MD) or transverse direction (TD) to prepare samples for measurement each having a size of 100 mm by 100 mm. Each of the samples for measurement was bent by 180° in its longitudinal direction at a bending position about 50 mm away from each of its end portions so that the end portions overlapped each other. After that, one reciprocation of a 1-kg roller was performed from the overlapped end portion side toward the bending position side, and then the generation status of a crack at the bending position was visually observed. The number of the samples measured was n=3.

(Production Example A-1): Preparation of mixed syrup A-1

A reactor equipped with a cooling tube, a temperature gauge, and a stirrer was fed with 173.2 parts by weight of a monomer solution formed of 2-ethylhexyl acrylate (manufactured by TOAGOSEI CO., LTD., hereinafter, abbreviated as "2EHA") as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 12.4 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1. 6. After that, 1.5 parts by weight of methanol (manufactured by KISHIDA CHEMICAL Co., Ltd., special grade) were added dropwise, and the mixture was subj ected to a reaction at 65°C for 2 hours. Thus, a hydrophilic polyurethane-based polymer/ethylenically unsaturated monomer mixed syrup was obtained. The resultant hydrophilic polyurethane-based polymer had a weight average molecular weight of 15,000. To 100 parts by weight of the resultant hydrophilic polyurethane-based polymer/ethylenically unsaturated monomer mixed syrup were added 48 parts by weight of 2EHA and 12 parts by weight of acrylic acid (manufactured by TOAGOSEI CO., LTD., hereinafter, abbreviated as "AA") as a polar monomer. Thus, a hydrophilic polyurethane-based polymer/ethylenically unsaturated monomer mixed syrup A-1 was obtained.

(Production Example A-2): Preparation of mixed syrup A-2

A four-necked flask was fed with a solution obtained by adding 0.05 part by weight of 2,2-dimethoxy-1,2-diphenylethan-1-one (a product available under the trade name "IRGACURE-651" from Ciba Japan) and 0.05 part by weight of 1-hydroxycyclohexyl-phenyl-ketone (a product available under the trade name "IRGACURE-184" from Ciba Japan) to 100 parts by weight of a mixed monomer solution formed of 90 parts by weight of 2EHA as an ethylenically unsaturated monomer and 10 parts by weight of AA as a polar monomer. Under a nitrogen atmosphere and under a normal temperature atmosphere, the inner bath temperature was adjusted to 80°C with a mantle heater, and the monomers were partially photopolymerized by exposure to UV light. Thus, a mixed syrup A-2 was obtained. The polymer generated by the partial polymerization had a weight average molecular weight of 1,070,000. Further, the mixed syrup A-2 had a polymer concentration of 25 wt%.

(Example A-1)

100 Parts by weight of the hydrophilic polyurethane-based polymer/ethylenically unsaturated monomer mixed syrup A-1 obtained in Production Example A-1 were homogeneously mixed with 30 parts by weight of 1,6-hexanediol diacrylate (a product available under the trade name "NK Ester A-HD-N" from Shin Nakamura Chemical Co., Ltd.), 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from Ciba Japan). Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.

The W/O type emulsion statically stored at room temperature for 30 minutes after the preparation was applied onto a polyethylene terephthalate film (hereinafter, referred to as "PET film") subjected to releasing treatment and having a thickness of 38 $\mu$m, so that the thickness of a foamed layer was 150 $\mu$m after photoirradiation, and continuously formed into a sheet shape. The top of the resultant sheet was further laminated with a polyester fiber laminated fabric having a thickness of 70 $\mu$m (a product available under the trade name "MILIFE (trademark) TY1010E" from JX Nippon ANCI, Inc.) obtained by laminating stretched polyester long fibers arranged in a matrix in a plane. Further, a PET film subjected to releasing treatment and having a thickness of 38 $\mu$m, onto which a W/O type emulsion statically stored at room temperature for 30 minutes after the preparation was applied so that the thickness of a foamed layer was 150 $\mu$m after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 310 $\mu$m was obtained. Next, the upper surface film was peeled off, and the high-water-content cross-linked polymer was heated at 130°C over 10 minutes. Thus, a composite sheet (A-1) having a thickness of about 310 $\mu$m was obtained.

Table 1 shows the results.

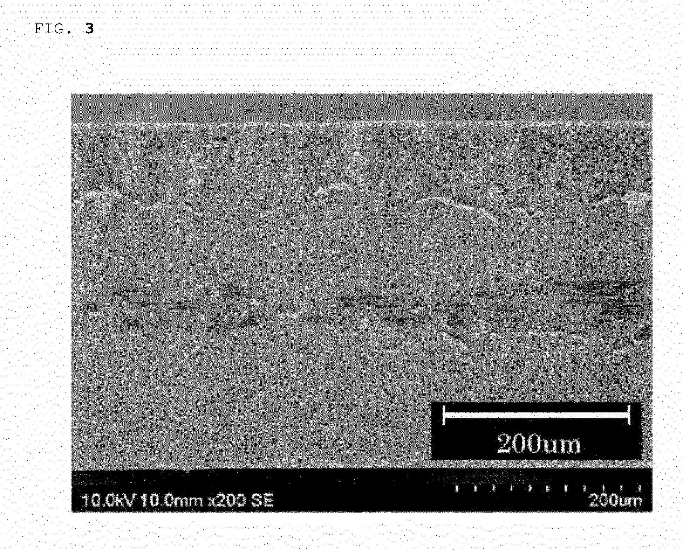

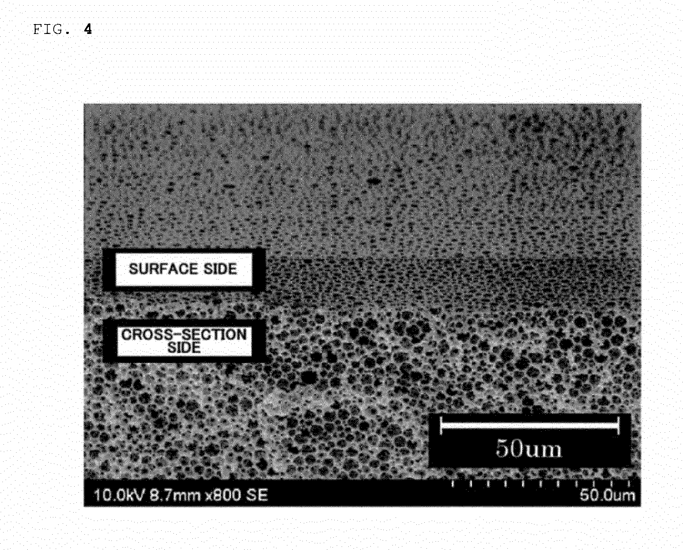

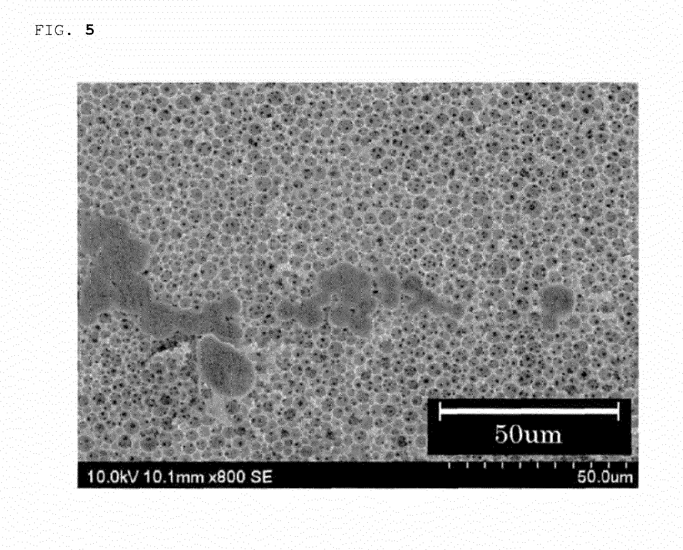

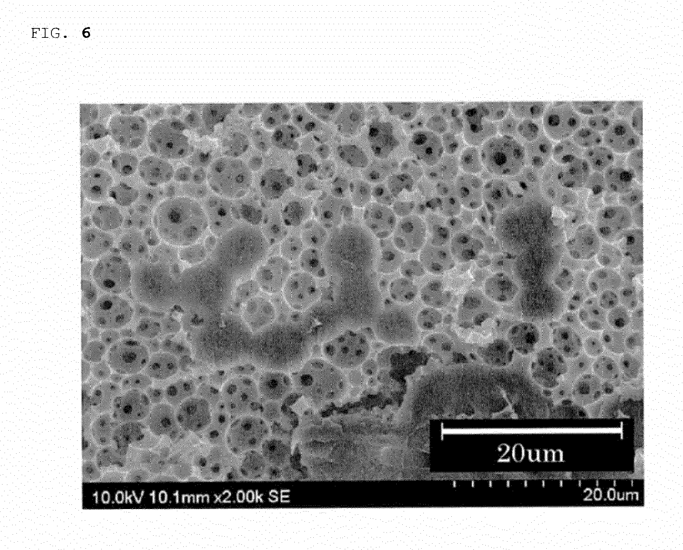

Further, FIG. 3 shows a photographic view of a cross-sectional SEM photograph of the produced composite sheet, FIG. 4 shows a photographic view of a surface/cross-sectional SEM photograph of the produced composite sheet taken from an oblique direction, and FIG. **5** and FIG. **6** each show a photographic view of a cross-sectional SEM photograph of the foamed layer of the produced composite sheet.

(Example A-2)

A stable W/O type emulsion was prepared in the same manner as in Example A-1 except that, in Example A-1, 152 parts by weight of ion-exchanged water as the aqueous phase were continuously supplied dropwise at normal temperature. The emulsion had the aqueous phase and the oil phase at a weight ratio of 60/40.

A composite sheet (A-2) having a thickness of about 310 $\mu$m was obtained by subjecting the resultant W/O type emulsion to the same operation as in Example A-1.

Table 1 shows the results.

(Example A-3)

A stable W/O type emulsion was prepared in the same manner as in Example A-1 except that, in Example A-1, 567 parts by weight of ion-exchanged water as the aqueous phase were continuously supplied dropwise at normal temperature. The emulsion had the aqueous phase and the oil phase at a weight ratio of 85/15.

A composite sheet (A-3) having a thickness of about 310 $\mu$m was obtained by subjecting the resultant W/O type emulsion to the same operation as in Example A-1.

Table 1 shows the results.

(Example A-4)

A composite sheet (A-4) having a thickness of about 310 $\mu$m was obtained in the same manner as in Example A-1 except that, in Example A-1, 10 parts by weight of 1,6-hexanediol diacrylate and 56 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer were used in place of 30 parts by weight of 1, 6-hexanediol diacrylate, with respect to 100 parts by weight of the hydrophilic polyurethane-based polymer/ethylenically unsaturated monomer mixed syrup A-1.

Table 1 shows the results.

(Example A-5)

A composite sheet (A-5) having a thickness of about 310 $\mu$m was obtained in the same manner as in Example A-1 except that, in Example A-1, the mixed syrup A-2 obtained in Production Example A-2 was used in place of the hydrophilic polyurethane-based polymer/ethylenically unsaturated monomer mixed syrup A-1 obtained in Production Example A-1.

Table 1 shows the results.

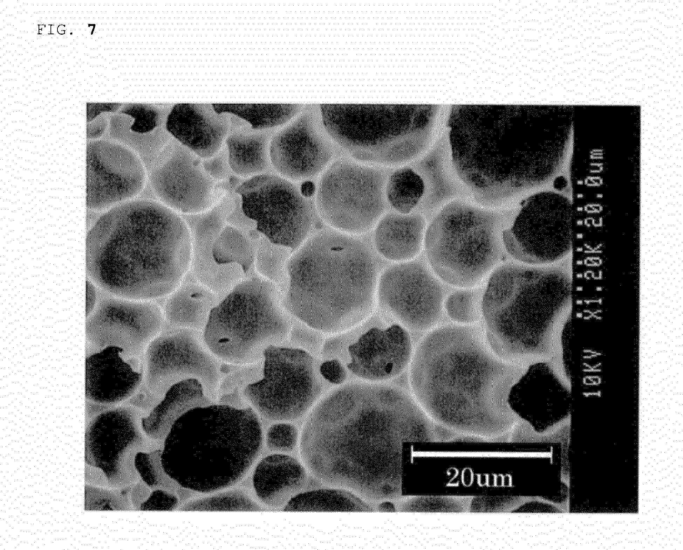

Further, FIG. 7 shows a photographic view of a cross-sectional SEM photograph of the foamed layer of the produced composite sheet (A-5).

[Table 1]

| | | | Examples A-1 | Example A-2 | Example A-3 | Example A-4 | Example A-5 |
|---|---|---|---|---|---|---|---|
| Polymerization-reactive syrup | Kind | | Syrup A-1 | Syrup A-1 | Syrup A-1 | Syrup A-1 | Syrup A-2 |
| Oil phase | Polymerization-reactive syrup | [part (s) by weight] | 100 | 100 | 100 | 100 | 100 |
| | A-HD-N | [part(s) by weight] | 30 | 30 | 30 | 10 | 30 |
| | UA | [part(s) by weight] | | | | 56 | |
| | Lucirin TPO | [part(s) by weight] | 0.5 | 0.5 | 0.5 | 0.5 | 0.5 |
| | Irganox 1010 | [part(s) by weight] | 1.0 | 1.0 | 1.0 | 1.0 | 1.0 |
| Aqueous phase | Ion-exchanged water | [part(s) by weight] | 395 | 200 | 745 | 502.5 | 395 |
| Cell structure | | | Open cell | Open cell | Open cell | Open cell | Closed cell |
| Average pore diameter of spherical cell | | [$\mu$m] | 4.4 | 4.1 | 4.8 | 4.3 | 13.0 |
| Average pore diameter of through-hole | | [$\mu$m] | 1.1 | 1.0 | 1.2 | 1.1 | Absent |
| Average pore diameter of surface opening | | [$\mu$m] | 2.2 | 2.2 | 2.2 | 1.9 | Absent |
| Density | | [g/cm$^3$] | 0.273 | 0.395 | 0.170 | 0.271 | 0.253 |
| Tensile strength | | [MPa] | 7.0 | 7.1 | 7.0 | 7.0 | 6.9 |

(Production Example B-1): Preparation of mixed syrup B-1

The mixed syrup A-1 obtained in Production Example A-1 was used as a hydrophilic polyurethane-based polymer/ethylenically unsaturated monomer mixed syrup B-1 without being subjected to any treatment.

(Production Example B-2): Preparation of mixed syrup B-2

In the preparation of the syrup B-1 in Production Example B-1, polyoxyethylene polyoxypropylene glycol and DBTL were fed into 2EHA. To the stirred mixture was added dropwise HXDI, and the resultant mixture was subjected to a reaction at 65°C for 4 hours. After that, 5.6 parts by weight of 2-hydroxyethyl acrylate (manufactured by KISHIDA CHEMICAL Co., Ltd., hereinafter, abbreviated as "HEA") were added dropwise in place of methanol, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer having an acryloyl group at each of both terminals/ethylenically unsaturated monomer mixed syrup were added 48 parts by weight of 2EHA and 12 parts by weight of AA as a polar monomer. Thus, a hydrophilic polyurethane-based polymer/ethylenically unsaturated monomer mixed syrup B-2 was obtained.

(Production Example B-3): Preparation of mixed monomer B-1

20 Parts by weight of sorbitan monooleate (a product available under the trade name "RHEODOL SP-O10V" from Kao Corporation), 72 parts by weight of 2EHA, and 8 parts by weight of AA were mixed and stirred well until a homogeneous mixture was obtained. Thus, a mixed monomer B-1 was obtained.

(Example B-1)

100 Parts by weight of the hydrophilic polyurethane-based polymer/ethylenically unsaturated monomer mixed syrup B-1 obtained in Production Example B-1 were homogeneously mixed with 10 parts by weight of 1,6-hexanediol diacrylate (a product available under the trade name "NK Ester A-HD-N" from Shin Nakamura Chemical Co., Ltd.) (molecular weight: 226), 56 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from Ciba Japan). Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.

The W/O type emulsion statically stored at room temperature for 30 minutes after the preparation was applied onto a polyethylene terephthalate film (hereinafter, referred to as "PET film") subjected to releasing treatment and having a thickness of 38 $\mu$m, so that the thickness of a foamed layer was 150 $\mu$m after photoirradiation, and continuously formed into a sheet shape. The top of the resultant sheet was further laminated with a polyester fiber laminated fabric having a thickness of 70 $\mu$m (a product available under the trade name "MILIFE (trademark) TY1010E" from JX Nippon ANCI, Inc.) obtained by laminating stretched polyester long fibers arranged in a matrix in a plane. Further, a PET film subjected to releasing treatment and having a thickness of 38 $\mu$m, onto which a W/O type emulsion statically stored at room temperature for 30 minutes after the preparation was applied so that the thickness of a foamed layer was 150 $\mu$m after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 310 $\mu$m was obtained. Next, the upper surface film was peeled off, and the high-water-content cross-linked polymer was heated at 130°C over 10 minutes. Thus, a composite sheet (B-1) having a thickness of about 300 $\mu$m was obtained.

Table 2 shows the results.

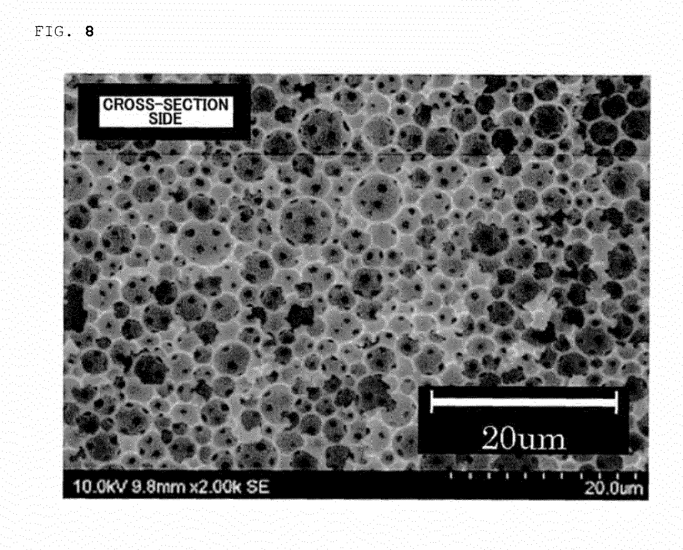

Further, FIG. **8** shows a photographic view of a cross-sectional SEM photograph of the foamed layer of the produced composite sheet.

(Example B-2)

A stable W/O type emulsion was prepared in the same manner as in Example B-1 except that, in Example B-1, the hydrophilic polyurethane-based polymer/ethylenically unsaturated monomer mixed syrup B-2 obtained in Production Example B-2 was used in place of the hydrophilic polyurethane-based polymer/ethylenically unsaturated monomer mixed syrup B-1 obtained in Production Example B-1. It should be noted that the emulsion had the aqueous phase and the oil phase at a weight ratio of 75/25.

Next, a composite sheet (B-2) having a thickness of about 300 μm was obtained in the same manner as in Example B-1.

Table 2 shows the results.

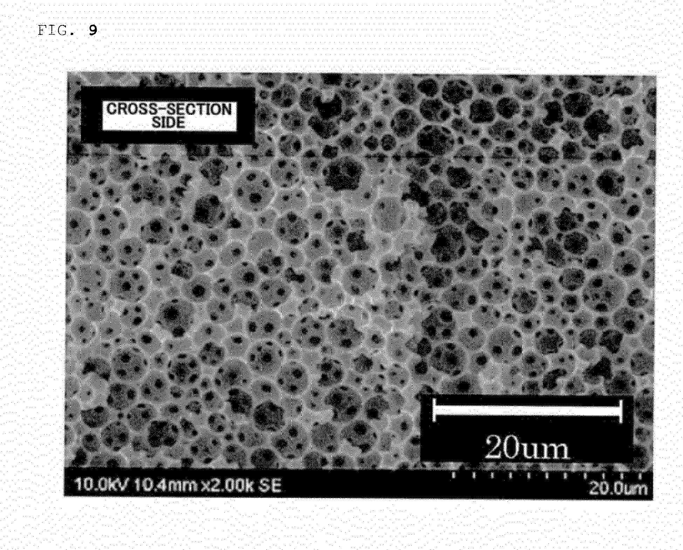

Further, FIG. **9** shows a photographic view of a cross-sectional SEM photograph of the foamed layer of the produced composite sheet.

(Example B-3)

A stable W/O type emulsion was prepared in the same manner as in Example B-2 except that, in Example B-2, 122 parts by weight of ion-exchanged water as the aqueous phase were continuously supplied dropwise at normal temperature. The emulsion had the aqueous phase and the oil phase at a weight ratio of 55/45.

Next, a composite sheet (B-3) having a thickness of about 300 μmwas obtained in the same manner as in Example B-1.

Table 2 shows the results.

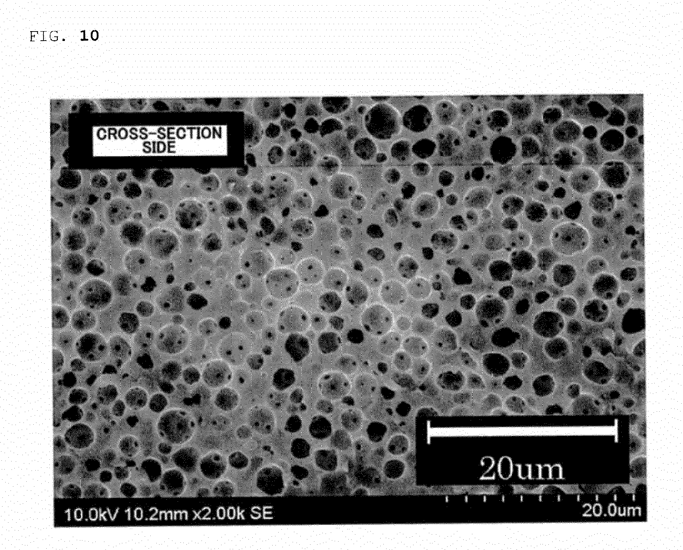

Further, FIG. **10** shows a photographic view of across-sectional SEM photograph of the foamed layer of the produced composite sheet.

(Example B-4)

A stable W/O type emulsion was prepared in the same manner as in Example B-2 except that, in Example B-2, 567 parts by weight of ion-exchanged water as the aqueous phase were continuously supplied dropwise at normal temperature. The emulsion had the aqueous phase and the oil phase at a weight ratio of 85/15.

Next, a composite sheet (B-4) having a thickness of about 300 μm was obtained in the same manner as in Example B-1.

Table 2 shows the results.

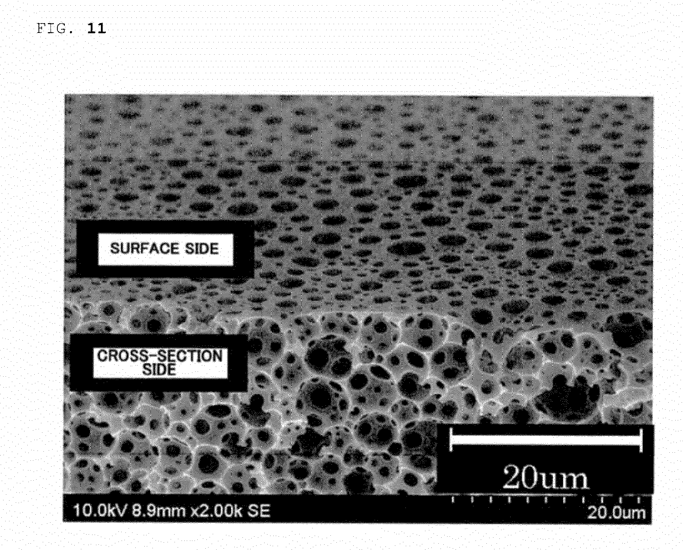

Further, FIG. **11** shows a photographic view of a surface/cross-sectional SEM photograph of the foamed layer of the produced composite sheet taken from an oblique direction.

(Example B-5)

A stable W/O type emulsion was prepared in the same manner as in Example B-2 except that, in Example B-2, bisphenol A propylene oxide-modified diacrylate (a product available under the trade name "FANCRYL FA-P321A" from Hitachi Chemical Company, Ltd.) (molecular weight: 898) was used in place of the urethane acrylate. It should be noted that the emulsion had the aqueous phase and the oil phase at a weight ratio of 75/25.

Next, a composite sheet (B-5) having a thickness of about 300 μm was obtained in the same manner as in Example B-1.

Table 2 shows the results.

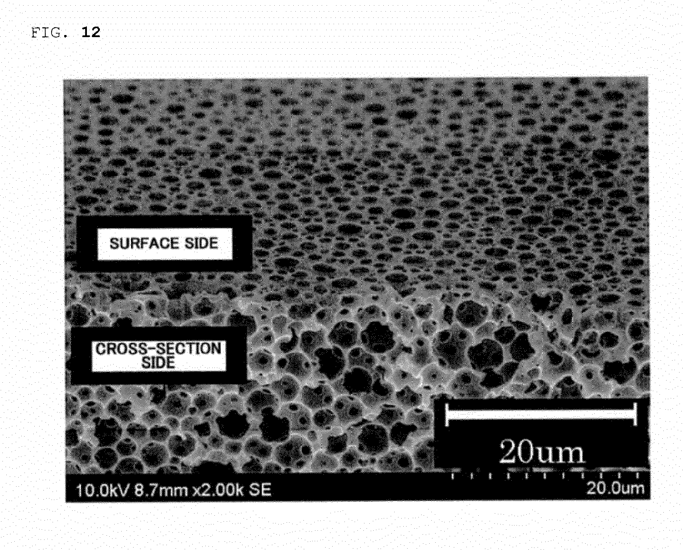

Further, FIG. **12** shows a photographic view of a surface/cross-sectional SEM photograph of the foamed layer of the produced composite sheet taken from an oblique direction.

(Comparative Example B-1)

A W/O type emulsion was prepared in the same manner as in Example B-1 except that, in Example B-1, the mixed monomer B-1 obtained in Production Example B-3 was used in place of the hydrophilic polyurethane-based polymer/ethylenically unsaturated monomer mixed syrup B-1 obtained in Production Example B-1. It should be noted that the generation of free water was observed in the emulsification step. Further, the emulsion had the aqueous phase and the oil phase at a weight ratio of 75/25.

Next, a composite sheet (B-C1) having a thickness of about 210 μm was obtained in the same manner as in Example B-1 except that free water visually observable on the surface of the resultant W/O type emulsion was removed immediately before the emulsion was formed into a shape.

Table 3 shows the results.

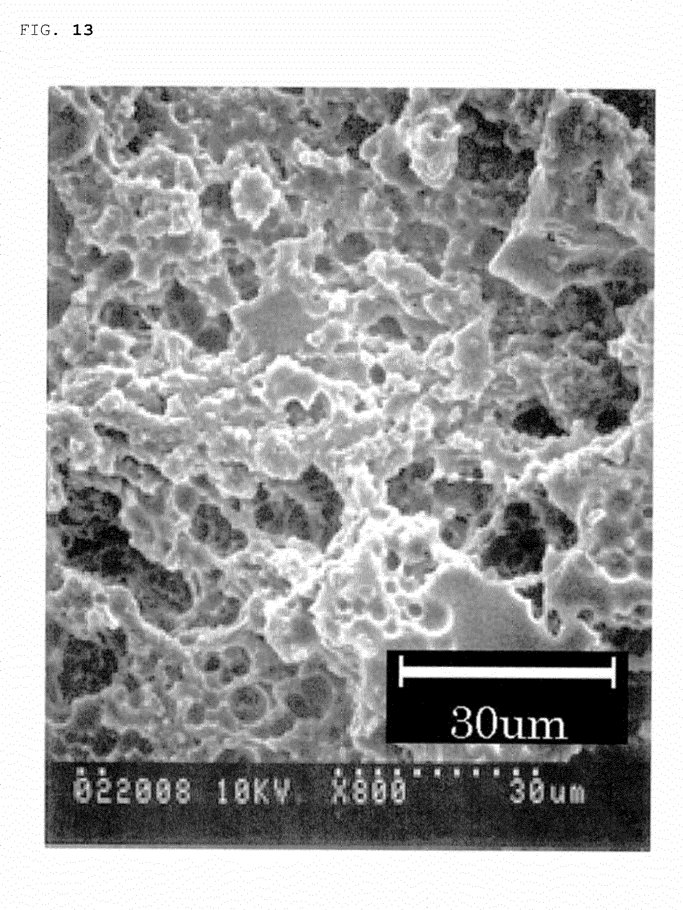

Further, FIG. **13** shows a photographic view of a cross-sectional SEM photograph of the foamed layer of the produced composite sheet.

(Comparative Example B-2)

A W/O type emulsion was prepared in the same manner as in Comparative Example B-1 except that, in Comparative Example B-1, bisphenol A propylene oxide-modified diacrylate(a product available under the trade name "FANCRYL FA-P321A" from Hitachi Chemical Company, Ltd.) (molecular weight: 898) was used in place of the urethane acrylate. It should be noted that the emulsion had the aqueous phase and the oil phase at a weight ratio of 75/25. The generation of free water was observed 30 minutes after the preparation of the emulsion.

Next, a composite sheet (B-C2) having a thickness of about 280 $\mu$m was obtained in the same manner as in Example B-1 except that free water visually observable on the surface of the resultant W/O type emulsion was removed immediately before the emulsion was formed into a shape.

Table 3 shows the results.

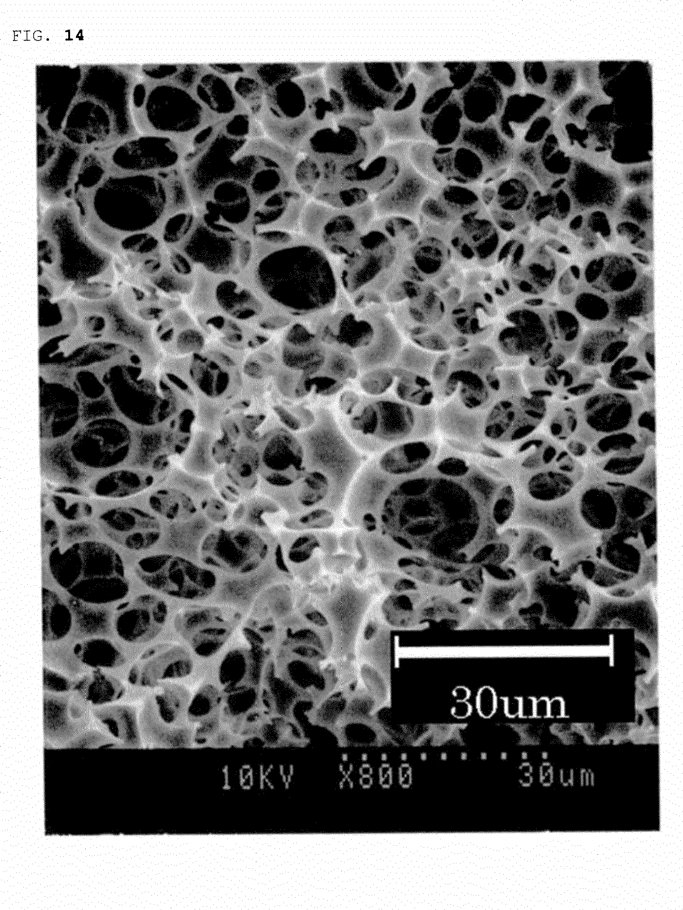

Further, FIG. **14** shows a photographic view of a cross-sectional SEM photograph of the foamed layer of the produced composite sheet.

(Comparative Example B-3)

A W/O type emulsion was prepared in the same manner as in Example B-2 except that, in Example B-2, NK Ester A-HD-N was not used and 20 parts by weight of UA as a reactive oligomer were used. It should be noted that the emulsion had the aqueous phase and the oil phase at a weight ratio of 75/25.

Next, a high-water-content cross-linked polymer having a thickness of about 1 mm was obtained in the same manner as in Example B-1, and then heated at 130°C over 20 minutes. Thus, a composite sheet (B-C3) having an entirely contracted foamed layer, having a partially collapsed cell structure, and having a thickness of about 300 $\mu$m was obtained.

Table 3 shows the results.

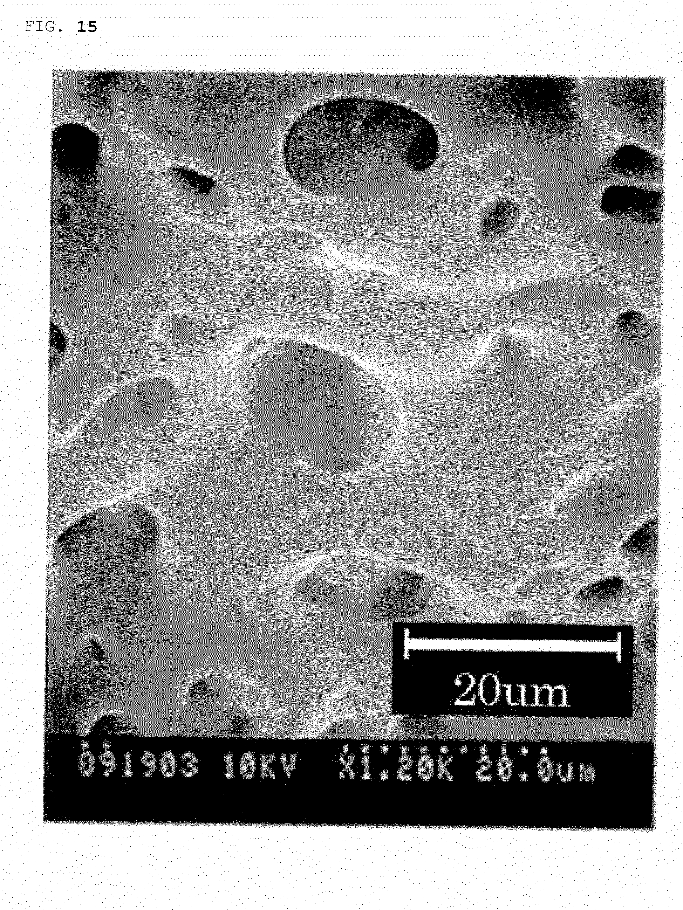

Further, FIG. **15** shows a photographic view of a cross-sectional SEM photograph of the foamed layer of the produced composite sheet.

(Comparative Example B-4)

A W/O type emulsion was prepared in the same manner as in Example B-2 except that, in Example B-2, 40 parts by weight of NK Ester A-HD-N were used and UA as a reactive oligomer was not used. It should be noted that the emulsion had the aqueous phase and the oil phase at a weight ratio of 75/25.

Next, a composite sheet (B-C4) having a thickness of about 300 $\mu$m was obtained in the same manner as in Example B-1.

Table 3 shows the results.

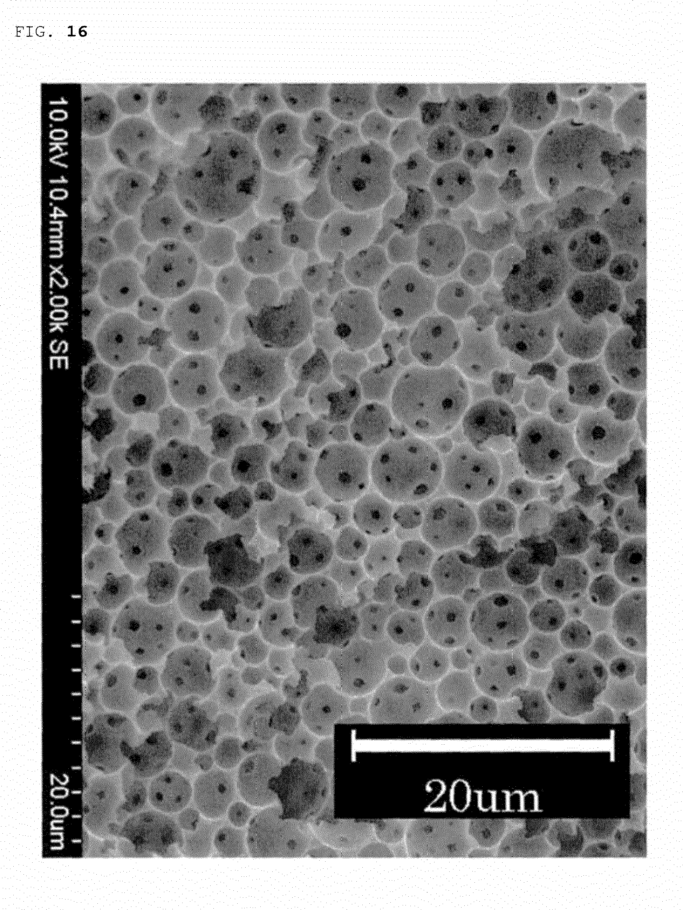

Further, FIG. **16** shows a photographic view of a cross-sectional SEM photograph of the foamed layer of the produced composite sheet.

[Table 2]

| | | | Example B-1 | Example B-2 | Example B-3 | Example B-4 | Example B-5 |
|---|---|---|---|---|---|---|---|
| Oil phase | | Syrup B-1 | 100 | - | - | - | - |
| | Polymerization-reactive syrup | Syrup B-2 | - | 100 | 100 | 100 | 100 |
| | | Mixed monomer B-1 | - | - | - | - | - |
| | | Sorbitan monooleate | Absent | Absent | Absent | Absent | Absent |
| | Cross-linking agent 1 | Kind | UA | UA | UA | UA | FA-P321A |
| | | Molecular weight | 3,720 | 3,720 | 3,720 | 3,720 | 898 |
| | | Compounding amount | 56 | 56 | 56 | 56 | 56 |

(continued)

|  |  |  | Example B-1 | Example B-2 | Example B-3 | Example B-4 | Example B-5 |
|---|---|---|---|---|---|---|---|
|  | Cross-linking agent 2 | Kind | A-HD-N | A-HD-N | A-HD-N | A-HD-N | A-HD-N |
|  |  | Molecular weight | 226 | 226 | 226 | 226 | 226 |
|  |  | Compounding amount | 10 | 10 | 10 | 10 | 10 |
|  | Lucirin TPO | | 0.5 | 0.5 | 0.5 | 0.5 | 0.5 |
|  | Irganox 1010 | | 1.0 | 1.0 | 1.0 | 1.0 | 1.0 |
| Aqueous phase | ion-exchanged water | | 502.5 | 502.5 | 204.7 | 949.2 | 502.5 |
| Static storage stability of emulsion | | | o | o | o | o | o |
| Structure of foamed layer | Average pore diameter of spherical cell ($\mu$m) | | 4.3 | 3.9 | 3.1 | 4.4 | 3.8 |
|  | Average pore diameter of through-hose ($\mu$m) | | 0.9 | 0.9 | 0.7 | 1.8 | 0.9 |
|  | Density (g/cm$^3$) | | 0.264 | 0.260 | 0.455 | 0.155 | 0.258 |
| Physical properties of composite sheet | Tensile strength (MPa) | | 0.30 | 0.42 | 0.91 | 0.21 | 0.41 |
|  | 50% Compression load (kPa) | | 87 | 85 | 186 | 54 | 87 |
|  | Generation of crack in 180° bending test | | Absent | Absent | Absent | Absent | Absent |
| Heat resistance of composite sheet | Rate of dimensional change (%) | | -0.4 | -0.3 | -0.5 | -0.3 | -0.3 |
|  | Rate of change in tensile strength (%) | | 16.2 | 16.8 | 17.6 | 11.6 | 13.2 |

[Table 3]

|  |  |  | Comparative Example B-1 | Comparative Example B-2 | Comparative Example B-3 | Comparative Example B-4 |
|---|---|---|---|---|---|---|
| Oil phase | Polymerization-reactive syrup | Syrup B-1 | - | - | - | - |
|  |  | Syrup B-2 | - | - | 100 | 100 |
|  |  | Mixed monomer B-1 | 100 | 100 | - | - |
|  |  | Sorbitan monooleate | Present | Present | Absent | Absent |
|  | Cross-linking agent 1 | Kind | UA | FA-P321A | UA | - |
|  |  | Molecular weight | 3,720 | 898 | 3,720 | - |
|  |  | Compounding amount | 56 | 56 | 30 | - |

(continued)

| | | | Comparative Example B-1 | Comparative Example B-2 | Comparative Example B-3 | Comparative Example B-4 |
|---|---|---|---|---|---|---|
| | Cross-linking agent 2 | Kind | A-HD-N | A-HD-N | - | A-HD-N |
| | | Molecular weight | 226 | 226 | - | 226 |
| | | Compounding amount | 10 | 10 | - | 40 |
| | Lucirin TPO | | 0.5 | 0.5 | 0.5 | 0.5 |
| | Irganox 1010 | | 1.0 | 1.0 | 1.0 | 1.0 |
| Aqueous phase | Ion-exchanged water | | 502.5 | 502.5 | 394.5 | 424.5 |
| Static storage stability of emulsion | | | x | Δ | o | o |
| Structure of foamed layer | Average pore diameter of spherical cell ($\mu$m) | | Foamed layer not having uniform cell structure | 22.8 | Foamed layer having partially collapsed cell structure | 8.5 |
| | Average pore diameter of through-hole ($\mu$m) | | | 9.7 | | 0.9 |
| | Density (g/cm$^3$) | | | 0.298 | | 0.27 |
| Physical properties of composite sheet | Tensile strength (MPa) | | | 0.07 | | 0.08 |
| | 50% Compression load (kPa) | | | 79 | | 116 |
| | Generation of crack in 180° bending test | | | Broken | | Broken |
| Heat resistance of composite sheet | Rate of dimensional change (%) | | | -0.4 | | -0.2 |
| | Rate of change in tensile strength (%) | | | 15.4 | | 14.2 |

The composite sheet of the present invention is suitable for innumerable applications such as a cushioning material, an insulating material, a heat-insulating material, a soundproof material, a dustproof material, a filtration material, and a reflective material.

Reference Signs List

Industrial Applicability

**100**　　composite sheet
**1**　　substrate
**2**　　foamed layer
**2a**　　foamed layer
**2b**　　foamed layer

**Claims**

1.　A composite sheet, comprising:

　　a substrate; and
　　a foamed layer which is provided on at least one surface side of the substrate,

wherein:

the foamed layer has spherical cells, an average pore diameter of each of the spherical cells being less than 30 $\mu$m; and
the foamed layer has a density of 0.1 g/cm$^3$ to 0.9 g/cm$^3$.

2. A composite sheet according to claim 1, wherein the composite sheet is crack-free in a 180° bending test.

3. A composite sheet according to claim 1, wherein the composite sheet has a rate of dimensional change of less than $\pm$5% when stored at 125°C for 14 days.

4. A composite sheet according to claim 1, wherein the composite sheet has a rate of change in tensile strength of less than $\pm$20% when stored at 125°C for 14 days.

5. A composite sheet according to claim 1, wherein the foamed layer has an open-cell structure in which through-holes are present between adjacent spherical cells.

6. A composite sheet according to claim 5, wherein the through-holes each have an average pore diameter of 5 $\mu$m or less.

7. A composite sheet according to claim 1, wherein the foamed layer has surface openings, an average pore diameter of each of the surface openings being 5 $\mu$m or less.

8. A composite sheet according to claim 1, wherein the foamed layer has a density of 0.1 g/cm$^3$ to 0.5 g/cm$^3$.

9. A composite sheet according to claim 1, wherein the substrate comprises at least one kind selected from a fiber woven fabric, a fiber nonwoven fabric, a fiber laminated fabric, a fiber knitted fabric, a resin sheet, a metal foil sheet, and an inorganic fiber.

10. A composite sheet according to claim 1, wherein the composite sheet comprises the substrate and foamed layers which are respectively provided on both surface sides of the substrate.

11. A composite sheet according to claim 1, wherein the composite sheet has a total thickness of 0.5 mm or less.

FIG. 1

FIG. 2

FIG. 3

10.0kV 10.0mm x200 SE          200um

200um

FIG. 4

FIG. 5

50um

10.0kV 10.1mm x800 SE          50.0um

FIG. 6

FIG. 7

FIG. 8

FIG. 9

FIG. 10

FIG. 11

FIG. 12

FIG. 13

FIG. **14**

FIG. 15

FIG. 16

FIG. **17**

<table>
<tr><td colspan="2"><strong>INTERNATIONAL SEARCH REPORT</strong></td><td>International application No.<br>PCT/JP2011/068554</td></tr>
</table>

**A. CLASSIFICATION OF SUBJECT MATTER**
*B32B5/18*(2006.01)i, *C08J9/28*(2006.01)i

According to International Patent Classification (IPC) or to both national classification and IPC

**B. FIELDS SEARCHED**

Minimum documentation searched (classification system followed by classification symbols)
B32B5/18, C08J9/28

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-18921 B2 (Teijin Cordley Ltd.),<br>16 March 1994 (16.03.1994),<br>claims; column 5, line 26 to column 6, line 14;<br>column 6, lines 30 to 42; fig. 1 to 3<br>(Family: none) | 1-11 |
| A | JP 3-64541 B2 (Ferro Enamels (Japan) Ltd.),<br>07 October 1991 (07.10.1991),<br>claims; column 6, line 11 to column 7, line 12;<br>column 10, lines 13 to 38; column 11, line 29<br>to column 12, line 34; fig. 1<br>(Family: none) | 1-11 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 November, 2011 (11.11.11) | Date of mailing of the international search report<br>22 November, 2011 (22.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

44

**INTERNATIONAL SEARCH REPORT**

International application No.

PCT/JP2011/068554

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-291363 A  (Dainichiseika Color & Chemicals Mfg. Co., Ltd.), 04 November 1998 (04.11.1998), claims; paragraphs [0019], [0020], [0026] to [0029] & US 6159605 A            & EP 858904 A1 & DE 69806826 D           & DE 69806826 T | 1-11 |
| A | JP 2002-52808 A  (Ricoh Co., Ltd.), 19 February 2002 (19.02.2002), claims; paragraphs [0025] to [0032], [0045] to [0049], [0062]; fig. 1 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001009952 A
- JP 2001038837 A
- WO 2002101141 A1
- US 3565817 A
- JP 3066323 B
- JP 2003514052W B
- JP 2001163904 A
- JP 2003510390W B
- JP 2003013015 A

**Non-patent literature cited in the description**

- **LISSANT ; MAHAN.** A study of medium and high internal phase ratio water/polymer emulsions. *Journal of Colloid and Interface Science,* January 1973, vol. 42 (1), 201-208